(19) Europäisches Patentamt / European Patent Office / Office européen des brevets

(11) **EP 3 077 338 B1**

(12) **EUROPEAN PATENT SPECIFICATION**

(45) Date of publication and mention of the grant of the patent:
**16.10.2019   Bulletin 2019/42**

(21) Application number: **14867635.6**

(22) Date of filing: **25.11.2014**

(51) Int Cl.:
*C01F 17/00* (2006.01)    *C01B 9/02* (2006.01)
*C22B 59/00* (2006.01)

(86) International application number:
**PCT/CA2014/051118**

(87) International publication number:
**WO 2015/081427 (11.06.2015 Gazette 2015/23)**

(54) **DRY CHLORINATION PROCESS TO PRODUCE ANHYDROUS RARE EARTH CHLORIDES**

TROCKENCHLORIERUNGSVERFAHREN ZUR HERSTELLUNG WASSERFREIER SELTENERD-CHLORIDE

PROCÉDÉ DE CHLORATION À SEC POUR PRODUIRE DES CHLORURES DE TERRE RARE ANHYDRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **06.12.2013   US 201361912820 P**

(43) Date of publication of application:
**12.10.2016   Bulletin 2016/41**

(73) Proprietor: **Niobec Inc.**
**Saint-Honoré, Québec G0V 1L0 (CA)**

(72) Inventors:
• **BERGERON, Mario**
**Québec, Québec G1Y 2Y6 (CA)**
• **LANGLAIS, Alain**
**Lac-Beauport, Québec G3B 1M4 (CA)**
• **OURRIBAN, Mohamed**
**Longueuil, Québec J4N 1V1 (CA)**
• **PELLETIER, Pierre**
**Mont Royal, Québec H3R 1L4 (CA)**

(74) Representative: **Gevers Patents**
**Intellectual Property House**
**Holidaystraat 5**
**1831 Diegem (BE)**

(56) References cited:
CN-A- 1 373 232        CN-A- 102 703 682
CN-B- 101 914 679      US-B2- 8 486 360

• KORSHUNOV, B.G.: 'Applications and Potential Uses of Chlorination Methods in Metallurgy of Non-Common Metals' METALLURGICAL REVIEW OF MMIJ vol. 8, no. 2, 1992, pages 1 - 33, XP008183726
• WANG, Z.-C. ET AL.: 'Rare Earth Extraction and Separation from Mixed Bastnaesite-Monazite concentrate by Stepwise Carbochlorination-Chemical Vapor Transport' METALLURGICAL AND MATERIALS TRANSACTIONS B vol. 33, no. 5, 01 October 2002, pages 661 - 668, XP019697365
• ZHANG, L.-Q. ET AL.: 'Rare Earth Extraction from Bastnaesite Concentrate by Stepwise Carbochlorination-Chemical Vapor Transport-Oxidation' METALLURGICAL AND MATERIALS TRANSACTIONS B vol. 35B, no. 2, 01 April 2004, pages 217 - 221, XP001220851
• MURASE, K. ET AL.: 'Extraction and mutual separation of rare earths from concentrates and crude oxides using chemical vapor transport' JOURNAL OF ALLOYS AND COMPOUNDS vol. 233, no. 1-2, 15 January 1996, pages 96 - 106, XP022268812 DOI: 10.1016/0925-8388(96)80040-5

**Description**

TECHNICAL FIELD OF THE INVENTION

The technical field relates to a process to produce anhydrous rare earth chlorides from an ore containing rare earths.

BACKGROUND

The main minerals as sources of the industrial production of light rare earth metals (La, Ce, Pr, Nd, Sm, Eu) are Monazite, $LnPO_4$ and Bastnaesite $LnFCO_3$. These minerals are normally present in association within carbonatites hard rock deposits. Monazite and Bastnaesite are grinded to a given liberation diameter and concentrated by different minerals processing technologies mainly by gravimetric methods and flotation processes. The obtained rare earth concentrates which can be of different compositions are then treated by an acidic treatment, $H_2SO_4$, or an alkali leaching procedure, NaOH (Gupta, C. K., and Krishnamurthy, N., 2005, Extractive metallurgy of Rare Earths). The presence of fluorine ions in these procedures creates problems by the production of insoluble residues of rare earths, and of thorium and uranium, which are a source of an important environmental problem (Wang et al., 2002, Metallurgical and Materials Transactions B, vol. 33B, pp. 661- 668).

In metallurgical applications, dry chlorination is a process wherein chlorine, in a gaseous state, transforms a given mineral in its chloride forms. Dry chlorination processes are applicable to pure element, metal, sulphides, oxides, carbonates, phosphates, etc. Theoretical main approaches and basic equipment employed at industrial scale are described in the classic works (Kroll, W., 1952, Metal Industry, vol. 81, pp. 270-366; Korshunov, B. J., 1992, Metallurgical Review of MMIJ, vol. 8, No.2, pp. 1-33). Limited information is available on dry chlorination of mixed Monazite/Bastnaesite concentrates and on pure Monazite only and Bastnaesite only concentrates. The first dry chlorination procedure on a pure Monazite concentrate was reported by Hartley, F. R. et al. (Hartley, F. R. and Wylie, A. W., 1950, Journal of the Society of Chemical Industry, vol. 69, no. 1, pp. 1-7). Conversion of the phosphates to chlorides at a yield of 90 % was achieved in 3.5 hours at 700 °C using $Cl_2$ and wood charcoal as a reducer. In a subsequent experimentation, Hartley, F. R., (Hartley, F. R., 1952, J. Appl. Chem. vol. 2, pp. 24-31) has studied the dry chlorination of Monazite by $Cl_2$ at temperatures varying from 800 to 1000 °C in presence of wood charcoal. At 950 °C, a conversion of 95 % of rare earths to chlorides was obtained in approximately two (2) hours, with a separation of thorium chloride as a volatile phase from the obtained rare earth chlorides. The thorium chloride was condensed along other volatile chloride phases such as $FeCl_3$, $PCl_3$ and was clearly contaminated. Gokhale, Y. W. et al. and Hilal O. M. et al. repeated the experiments of Hartley with similar results except that thorium chloride was obtained as nearly pure (Gokhale, Y. W., et al., 1960, J. Sci. Industr. Res., vol. 19B, 422-425; Hilal O. M. and El Gohary, F. A., 1961, Industrial and Engineering Chemistry vol. 53, no. 12 pp. 997-998). Murase, K., et al. studied the dry chlorination of Monazite by $Cl_2$ in the presence of a graphite reducer and a complex forming reagent, KCl (Murase, K., et al., 1994, Chemistry Letters, pp. 1297-1300). They demonstrated the presence of volatile adduct complexes of the type $KLnCl_4$ formed by the reaction of $LnCl_3$ with KCl which are expelled from the chlorination reactor at temperatures around 1000 °C. These volatile adduct compounds are decomposed into solid chlorides $RCl_3$ and KCl along a decreasing temperature gradient producing a relatively weak chromatographic separation of rare earth chlorides. A related experiment by Murase, K., et al. (Murase, K., et al., 1996, Journal of Alloys and Compounds vol. 233, pp. 96-106) using $AlCl_3$ as a complex forming agent, $AlCl_3 \cdot LnCl_3$, produced analogous results.

The above dry chlorination experiments and results are not applicable to Bastnaesite and Bastnaesite/Monazite mixed concentrates. The fluorine ion present in the Bastnaesite lattice will interact with the $Ln^{+3}$ cations and $Th^{+4}$ and $U^{+4}$ to produce fluoride compounds of the form $LnF_3$, and the compounds $UF_4$ and $ThF_4$. $LnF_3$ will not be recovered by the dissolution processes with acids or by fused salt electrolysis of $LnCl_3$. The formation of an acid insoluble residue (15 %) attributed to the presence of fluorine ion during the industrial dry chlorination of a Bastnaesite concentrate has been reported by Brugger, W. et al. (Brugger, W. and Greinacher, E., 1967, Journal of Metals, vol. 19/12, pp. 32-35). Presence of $ThF_4$ and $UF_4$ will block their separation from the chloride mixture, their boiling point (b. p.) being in the range, $ThF_4$ b. p. 1680 °C, $UF_4$ b. p. 1417 °C, of the rare earth chlorides (ex., $NdCl_3$ b. p. 1600 °C) and the alkaline earth chlorides composing the chloride mixture (ex., $BaCl_2$ 1560 °C). Therefore, the $ThCl_4$, separation observed by Hartley, F. R., 1952 at 950 °C and others will not be operative.

Dry chlorination procedures applicable to mixed Monazite/Bastnaesite concentrates has been developed by Chinese researchers. In addition to carbon and chlorine, $SiCl_4$ was used as a defluorination agent and $AlCl_3$ was introduced to create a dimer type complex between $ThCl_4$ and $AlCl_3$ ($ThCl_4 \cdot AlCl_3$) to increase the vapour pressure of $ThCl_4$. The $AlCl_3$ procedure used was similar to the one developed by Murase, K., et al. (Murase, K., et al., 1996, Journal of Alloys and Compounds vol. 233, pp. 96-106). A rare earth chloride concentrate was produced and thorium was isolated from the volatile non rare earth chlorides as $ThCl_4$, (Wang, Z. C., Zhang, Li-Q., Lei, P. X., Chi, M., 2002., Metallurgical and Materials Transactions B. Vol. 33B, pp. 661-668; Zhang, Li-Q., Wang, Z. C., Tong, S. X., Lei, P. X., Zou, W., 2004, Metallurgical and Materials Transactions B. Vol. 35B, pp. 217-221). Although this improved Chinese process appears to be feasible at industrial scale, two main drawbacks are to be mentioned. The first drawback concerns the difficulty to form $SiCl_4$, an important reactant in their procedure, from the reaction: $SiO_2 + C + 2Cl_2 = SiCl_4 + CO_2$. This reaction occurs at high temperature with a poor efficiency, 6 % conversion of $SiO_2$ to $SiCl_4$ at 1000 °C (Bergeron, M., Langlais, A., US patent no. 8,486,360). It is well known that $SiO_2$ is the most difficult mineral phase to transform into chlorides by a dry chlorination procedure in the presence of a carbon reducer (Kroll, W., 1952). At industrial scale $SiCl_4$ is currently produced by chlorination of metallurgical silicon with HCl and create a mix of silicon chlorides, some of them being pyrophoric. The second drawback concerns the use of $AlCl_3$ as a reactant, which will tend to block piping to a great extent. $AlCl_3$ is a solid at temperatures < 178°C. Piping obstruction by $AlCl_3$ will deter application of this process at industrial scale.

There is thus a need to develop a new process to extract the rare earths from ore concentrates obtained from mining and metallurgical operations. The chlorination process should be able to transform the rare earth values from their phosphates and/or oxide and/or carbonate fluoride forms to their corresponding anhydrous chloride forms. Anhydrous chlorides can be used in a subsequent step to produce mishmetal by fused salt electrolysis or can be readily dissolved in a weak acidic solution and separated by solvent extraction or by column ion exchange. This is different of processes based on dissolution of concentrates in strong aqueous acid from which hydrated chloride rare earth salts can be produced, $LnCl_3(H2O)_X$. The hydrated salts once formed cannot be transformed to the anhydrous form $LnCl_3$ by a heating dehydration procedure. The hydrated salts undergo hydrolysis to the oxyhalide LnOCl and the anhydrous salts cannot be made (Cotton, S., 2006, Lanthanide and Actinide Chemistry, John Wiley & Sons, 263 p.). The oxyhalide are slightly soluble in strong aqueous acid limiting their utilisation in metallurgy. The oxyhalide are not reactive to a salt melt electrolysis procedure being more stable than the alkaline earth chloride salts (Group IIA) currently employed as electrolytes.

In some implementations, the chlorination process should be able to isolate thorium and uranium, which are detrimental to the environment, from the anhydrous rare earth chloride concentrate and from any other element present in the concentrate submitted to the chlorination process.

BRIEF SUMMARY OF THE INVENTION

It is therefore an aim of the present invention to address the above mentioned issues.

According to a general aspect, there is provided a process for producing at least one rare earth chloride from an ore containing the at least one rare earth. The process comprises: contacting the ore containing the at least one rare earth with reactants comprising a carbonaceous reducing agent, chlorine, and a boron-containing Lewis acid in a chlorination reactor to produce a gaseous product and a non-volatile chloride mixture comprising the at least one rare earth chloride, the boron-containing Lewis acid being selected from the group consisting of: $B(OH)_3$, $BCl_3$, $B_2O_3$, $Na_2B_4O_7$, and mixtures thereof.

In an embodiment, the non-volatile chloride mixture is an anhydrous non-volatile chloride mixture.

In an embodiment, the ore containing the at least one rare earth is an ore concentrate containing the at least one rare earth. The ore concentrate can be a rare earth flotation concentrate.

In an embodiment, wherein the ore comprises at least one of Bastnaesite ore and Monazite ore concentrate.

In an embodiment, contacting the ore with the reactants is carried out in the chlorination reactor at a temperature ranging between about 300 °C and about 1000 °C.

In an embodiment, contacting the ore with the reactants is carried out in the chlorination reactor at a temperature ranging between about 400 °C and about 800 °C.

In an embodiment, the process further comprises comminuting the ore containing the at least one rare earth into ore particles. 95 wt% of the ore particles can range between about 10 $\mu$m and about 1000 $\mu$m. The process can further comprise pelletizing a mixture including the ore particles and a binding agent to obtain pellets; and wherein contacting comprises contacting the pellets with the reactants. The pellets contacted with the reactants can have a diameter ranging between about 1 mm to about 10 mm. The process can further comprise screening the pellets; and recycling the screened pellets smaller than about 1 mm to the pelletizing step. The process can further comprise drying the pellets in an inert atmosphere prior to contacting the pellets with the reagents in the chlorination reactor. The mixture can further comprise the carbonaceous reducing agent in a solid state. The carbonaceous reducing agent in the solid state can comprise at least one of activated charcoal, activated carbon, charcoal, coal, coke, and graphite. The mixture further can comprise the boron-containing Lewis acid in a solid state.

In an embodiment, a ratio of a mass of the ore and a mass of carbonaceous reducing agent introduced in the chlorination reactor is above 1.

In an embodiment, the reactants comprises a defluorination agent.

In an embodiment, at least one of the reactants is in a gaseous state. The at least one of the reactants in the gaseous state can comprise chlorine. The at least one of the reactants in the gaseous state can comprise the boron-containing Lewis acid. The at least one of the reactants in the gaseous state can further comprise the carbonaceous reducing agent. The carbonaceous reducing agent in the gaseous state can comprise carbon monoxide.

In an embodiment, the boron-containing Lewis acid comprises a boron-containing Lewis acid in a solid state.

The boron containing Lewis acid comprises at least one of $B(OH)_3$, $BCl_3$, $B_2O_3$, $Na_2B_4O_7$, and mixtures thereof. The boron containing Lewis acid can comprise at least one boron oxide. The boron containing Lewis acid can comprise gaseous boron trichloride ($BCl_3$). A ratio of chlorine and $BCl_3$ introduced in the chlorination reactor can range between about 1 and about 20.

In an embodiment, contacting further comprises feeding directly the boron-containing Lewis acid in the gaseous state in the chlorination reactor.

In an embodiment, the process further comprises mixing the boron-containing Lewis acid in the gaseous state with at least one of the reactants in a gaseous state to obtain a gaseous reactant mixture; and feeding the gaseous reactant mixture in the chlorination reactor.

In an embodiment, the carbonaceous reducing agent comprises a carbonaceous reducing agent in a solid state. The carbonaceous reducing agent in the solid state can comprise at least one of activated charcoal, activated carbon, charcoal, coal, coke, and graphite. The boron-containing Lewis acid can be adsorbed on the carbonaceous reducing agent in the solid state.

In an embodiment, contacting further comprises feeding directly the gaseous carbonaceous reducing agent in the chlorination reactor.

In an embodiment, the process comprises mixing the gaseous carbonaceous reducing agent with at least one of the reactants in a gaseous state; and feeding the gaseous reactant mixture in the chlorination reactor.

In an embodiment, the gaseous product comprises volatile chlorides and unreacted gaseous reactants. The volatile chlorides can comprise $FeCl_3$, $AlCl_3$, $POCl_3$, $PCl_3$, $PCl_5$, $TiCl_4$, $SiCl_4$, $NbCl_5$, $ZrCl_4$, $HfCl_4$, and mixture thereof. The unreacted gaseous reactants can comprise chlorine and $BCl_3$. The process can further comprise withdrawing the volatile chlorides and the unreacted gaseous reactants from the chlorination reactor and condensing the volatile chlorides withdrawn from the chlorination reactor in a volatile condenser unit to separate the condensed chlorides from the unreacted gaseous reactants. The process can further comprise separating the condensed chlorides by fractional distillation; and recovering separately distilled chloride products. The process can further comprise distilling the $Cl_2$ and $BCl_3$, downstream the volatile condenser unit, and feeding the chlorination reactor with the distilled $Cl_2$ and $BCl_3$ as at least two of the reactants.

In an embodiment, the non-volatile chloride mixture comprises at least one of an alkaline chloride and an alkaline earth chloride.

In an embodiment, the non-volatile chloride mixture is anhydrous and the process further comprises recovering the anhydrous non-volatile chloride mixture by maintaining the anhydrous chloride mixture under an inert gas atmosphere and raising a temperature of the chlorination reactor to liquefy the anhydrous non-volatile chloride mixture. The ore containing the at least one rare earth further can comprise thorium and/or uranium and a temperature below at least one of a boiling point of thorium chloride and a boiling point of the uranium chloride can be maintained to recover the anhydrous non-volatile chloride mixture by liquefaction. The carbonaceous reducing agent can be in a solid state and the anhydrous non-volatile chloride mixture can further comprise an unreacted portion of the solid carbonaceous reducing agent, the process can then further comprise carrying out a molten salt filtration on the anhydrous non-volatile chloride mixture to recover the unreacted solid carbonaceous reducing agent. The process can further comprise adding the recovered solid carbonaceous reducing agent to the chlorination reactor as one of the reactants.

In an embodiment, the ore containing the at least one rare earth further comprises thorium and/or uranium and the contacting step further comprises producing thorium and/or uranium chlorides. Contacting the ore with the reactants can be carried out in the chlorination reactor at a temperature ranging between about 300 °C and about 700 °C and more than 50 wt% of the thorium and/or uranium chlorides can be contained in the non-volatile chloride mixture in the chlorination reactor. The temperature in the chlorination reactor can range between about 500 °C and about 600 °C. The process can further comprise recuperating the thorium and/or uranium chlorides from a remainder of the non-volatile chloride mixture. Recuperating the thorium and/or uranium chlorides can comprise gasifying the thorium and/or uranium chlorides in a thorium and/or uranium distillation unit; separating the thorium and/or uranium in a gaseous state from the remainder of the non-volatile chloride mixture; and condensing the separated thorium and/or uranium as thorium and/or uranium chlorides. The gasification, condensation and separation steps can comprise maintaining an inert gas atmosphere. The gasification of the thorium and/or uranium chlorides from the remainder of the non-volatile chloride mixture can be carried out at a temperature above a boiling temperature of the thorium and/or uranium chlorides. The carbonaceous reducing agent can comprise a carbonaceous reducing agent in a solid state and the non-volatile chloride mixture further can comprise an unreacted portion of the solid carbonaceous reducing agent, the process can then further comprise carrying out a molten salt filtration on the remainder of the non-volatile chloride mixture to recover the unreacted solid carbonaceous reducing agent. The process can further comprise adding the recovered solid carbonaceous reducing agent to the chlorination reactor as one of the reactants. Contacting the ore with the reactants can be carried out in the chlorination reactor at a temperature ranging between about 700 °C and about 1000 °C and more than 50 wt% of the thorium and/or uranium chlorides can be contained in the gaseous product of the chlorination reactor. The temperature in the chlorination reactor can range between about 800 °C and about 950 °C. The process can further comprise recuperating the thorium and/or uranium chlorides from a remainder of the gaseous product in a thorium-uranium condenser. A temperature of the thorium-uranium condenser can range between about 200 °C and about 700 °C. The remainder of the gaseous product can comprise volatile chlorides and unreacted gaseous reactants, the process can then further comprise condensing the volatile chlorides exiting the thorium-uranium condenser, downstream the thorium-uranium condenser, in a volatile chloride condenser unit. The volatile chlorides can comprise $FeCl_3$, $AlCl_3$, $POCl_3$, $PCl_3$, $PCl_5$, $TiCl_4$, $SiCl_4$, $NbCl_5$, $ZrCl_4$, $HfCl_4$, and mixture thereof. The unreacted gaseous reactants exiting the volatile chloride condenser unit can comprise $Cl_2$ and $BCl_3$, the process can then further comprise distilling the $Cl_2$ and $BCl_3$, downstream the volatile chloride condenser unit.

In an embodiment, the carbonaceous reducing agent comprises a carbonaceous reducing agent in a solid state and the non-volatile chloride mixture further comprises an unreacted portion of the solid carbonaceous reducing agent, the process can then further comprise carrying out a molten salt filtration on remainder of the non-volatile chloride mixture to recover the unreacted solid carbonaceous reducing agent.

In an embodiment, the at least one rare earth is recovered from the at least one rare earth chloride by one of fused salt electrolysis, ion exchange and solvent extraction.

In an embodiment, the at least one rare earth chloride produced is anhydrous.

In this specification, the term "rare earths" is intended to mean the fifteen (15) elements of the lanthanides series (Ln) from lanthanum to lutetium and also the associated elements Y, Sc, Hf, Zr, those elements having a chemical behavior similar to the rare earths and as such are often present in association with the rare earths. Thus, the term "rare earths" includes Lanthanum (La), Cerium (Ce), Praseodymium (Pr), Neodymium (Nd), Promethium (Pm), Samarium (Sa), Europium (Eu), Gadolinium (Gd), Terbium (Tb), Dysprosium (Dy), Holmium (Ho), Erbium (Er), Thulium (Tm), Ytterbium (Yb), Lutetium (Lu), Yttrium (Y), Scandium (Sc), Hafnium (Hf), and Zirconium (Zr).

In this specification, the terms "Lewis acid" and "Lewis acid compound" are used interchangeably.

BRIEF DESCRIPTION OF THE DRAWINGS

Fig. 1 is a schematical flowsheet of a low temperature chlorination process carried out with a solid reducer in accordance with an embodiment;

Fig. 2 is a schematical flowsheet of a low temperature chlorination process carried out with a gaseous reducer in accordance with an embodiment;

Fig. 3 is a schematical flowsheet of a high temperature chlorination process carried out with a solid reducer in accordance with an embodiment; and

Fig. 4 is a schematical flowsheet of a high temperature chlorination process carried out with a gaseous reducer in accordance with an embodiment.

It will be noted that throughout the appended drawings, like features are identified by like reference numerals.

DETAILED DESCRIPTION

In reference to the accompanying drawings, a process for producing anhydrous rare earth chlorides from an ore containing rare earths will be described. In an embodiment, the ore is an ore concentrate, i.e. an ore which is ground relatively finely and from which gangue (or waste) has been at least partially removed, thus concentrating the metal component. In some implementations, the process also isolates thorium and/or uranium, contained in the ore, also as anhydrous chlorides.

The process is applicable to rare earth concentrates or rare earth ores in general, i.e. ore or ore concentrates including at least one rare earth. For instance, a rare earth concentrate can contain about 20 to about 30 wt% of rare earths. The chlorination process produces a concentrate of anhydrous chlorides of rare earths and of their associated elements. The anhydrous rare earth chloride concentrate is suitable, for instance and without being limitative, for the production of rare earth metals by fused salt electrolysis or after dissolution in a weak acid by solvent extraction or ion exchange column.

Furthermore, in some implementations, if the rare earth concentrates or rare earth ores used as a feed material contain thorium and/or uranium compounds, they can be separated from the anhydrous rare earth chlorides and recuperated selectively.

In the process, an ore containing rare earths or a concentrate of the ore including the rare earths is provided as a feed material. If too coarse, the rare earth ore or concentrate can be comminuted, such as by grinding, to a predetermined particle size. A binder is added to the rare earth ore or concentrate particles and they are pelletized in a suitable equipment, such as pelletizing discs or drums and briquetting devices. The binder (or binding agent) is usually an organic compound, for example and without being limitative, fructose, sucrose or any compounds which have cohesive properties. The binding agent is completely consumed as a reducing agent or is transformed under a chloride form during the chlorination reaction. A solid carbonaceous reducer, such as coke, charcoal, activated charcoal, activated carbon, graphite, and the like, can also be added to the binder and feed material mixture. In an alternative embodiment, a gaseous carbonaceous reducer, such as carbon monoxide, can be used as a reactant instead of the solid carbonaceous reducer, as will be described in more details below. In some implementations, either the pellets include a solid carbonaceous reducer or the gaseous reactant includes a gaseous carbonaceous reducer. However, in other implementations, the pellets can include a solid carbonaceous reducer and the gaseous reactant can include a gaseous carbonaceous reducer.

Then, in a chlorination reactor, the pellets including the feed material, the binder, and optionally the solid carbonaceous reducer are contacted with a gaseous reactant. The gaseous reactant includes chlorine ($Cl_2$) and, optionally, boron trichloride ($BCl_3$). In an embodiment, the gaseous reactant can include solely boron trichloride, wherein the Cl ions of chlorine act as the chlorine in the chlorination reaction. In another embodiment, the gaseous reactant includes chlorine and boron trichloride. The $Cl_2/BCl_3$ ratio can range between 1 and 20. If the pellets are substantially free of solid carbonaceous reducer, a gaseous carbonaceous reducer can be supplied to the chlorination reactor as one of the gaseous reactants. The gaseous reactants, including gaseous chlorine, boron trichloride, if any, and carbonaceous reducer, if any, can be fed independently to the chlorination reactor or mixed together before their introduction into the chlorination reactor.

In some implementations, the gaseous reactant can be substantially free of boron trichloride ($BCl_3$). The boron trichloride can be replaced by a boron containing compound, which can be added directly as a powder in the chlorination reactor or mixed in the pellets, as a gas fed independently into the chlorination reactor or mixed with the other gaseous reactants, and adsorbed on the solid carbonaceous reducer, if any.

In some implementations, the reactant can further include a salt such as KCl, RbCl and/or CsCl. The salt can be added as a brine during the pelletization step and, thus, contained in the pellets and introduce in the chlorination reactor simultaneously therewith.

The chlorination reactor is designed to be able to resist to the corrosive nature of the gases used to obtain anhydrous rare earth chlorides such as gaseous chlorine ($Cl_2$).

In the chlorination reactor, a chlorination reaction is carried out wherein the rare earths are chlorinated. In addition to the anhydrous rare earth chlorides, the chlorination process also produces volatile chlorides such as $FeCl_3$, $POCl_3$, $TiCl_4$, etc. The volatile chlorides leave the chlorination reactor as a gaseous mixture and condense outside the chlorination reactor in a suitable vessel and, more particularly, a volatile condenser unit, as will be described in more details below. The gaseous mixture can also include unreacted reactants such as $Cl_2$ and $BCl_3$.

Furthermore, the unreacted $Cl_2$ and $BCl_3$ in gaseous state, exiting the chlorination reactor, can be recovered in a suitable condenser. $Cl_2$ and $BCl_3$ can be recuperated under a pure form after a distillation procedure and returned to the chlorination reactor as reactants for the chlorination reaction.

After the chlorination reaction, an anhydrous chloride mixture, in a solid state or a liquid state, is present in the chlorination reactor and must be recovered. The anhydrous chloride mixture contains the anhydrous rare earth chlorides as well as alkaline and alkaline earth chlorides. They are recovered in a suitable receptacle, which is maintained under an inert gas atmosphere to impede the oxidation and hydration of the chlorides contained therein.

In some implementations wherein the reactants include a carbonaceous reducer in a solid state, a molten salt filtration technique is carried out to separate the unreacted solid carbonaceous reducer from the anhydrous chloride mixture. The recovered and unreacted solid carbonaceous reducer can be reused as a reactant in the pelletizing step, described above. In some implementations, the process can be free of a filtration step. More particularly, if the pellets are substantially free of solid carbonaceous reducer, the process can be carried out without the molten salt filtration step.

In some implementations, if the rare earth concentrate or ore used as feed material includes compounds of thorium and/or uranium, the chlorination reaction also produces thorium and/or uranium chlorides. Depending on the chlorination temperature of the chlorination reaction, the thorium and/or uranium chlorides can or cannot be expelled from the chlorination reactor with the volatile chlorides and the unreacted gaseous reactants. If the thorium and/or uranium chlorides stay in the chlorination reactor with the rare earth chlorides, after the chlorination reaction, the separation of thorium and/or uranium chlorides from the rare earth chlorides is performed in a suitable container maintained under an inert gas atmosphere, to prevent oxidation and hydration of the chlorides, at a temperature permitting the selective evaporation of thorium and/or uranium chlorides from the remaining chloride mixture including the rare earth chlorides. On the contrary, if the thorium and/or uranium chlorides are expelled from the chlorination reactor, as volatile compounds, with the volatile chlorides and the unreacted gaseous reactants, the thorium and/or uranium chlorides are isolated in a suitable condensation vessel and, more particularly a thorium-uranium condenser, maintained at an appropriate temperature permitting the selective condensation of thorium and/or uranium chlorides as solid particles from the remaining gases escaping the chlorination reactor. The remaining gases include the unreacted gaseous reactants and the volatile chlorides, such as $FeCl_3$, $POCl_3$, $TiCl_4$, etc., which leave the chlorination reactor. Thus, the volatile chlorides are still present in the gaseous mixture exiting the thorium-uranium condenser and are separated from the unreacted reactants and selectively condensed downstream in a suitable vessel maintained at a suitable temperature.

For instance, the volatile chlorides, condensed in the suitable vessel, can be separated by fractional distillation and recovered as pure chloride products.

The chlorination process described above is based on several fundamental concepts, which will be explained in more details below.

More particularly, it is based on the use of a room temperature gaseous deficient electron compound, i.e. a Lewis acid where the ligand is the chloride ion, establishing a sigma type bonding between its empty $p_z$ orbital and one of the free electron pairs present on oxygen in a $sp^3$ orbital or a p orbital. This bonding destabilises the existing ionic bond between the Ln cations and the negatively charged oxygen of the phosphates and carbonates ligands, wherein Ln can be any element of the lanthanides series (Ln). The formation of the sigma bond ($\sigma_{p\text{-}sp3}$; $\sigma_{p\text{-}p}$) creates a positive charge on the oxygen because of the sharing of one of its free electron pair with the starting Lewis acid. Simultaneously, a negative charge on the electron deficient atom is created due to the transfer of the free electron pair in the empty $p_z$ orbital of the starting Lewis acid. Hence, an addition compound with a positive charge section and a negative charge section is formed.

Once the bonding between the Ln and the oxygen ligand is destabilised by the reaction with the Lewis acid compound, chlorination of the rare earths (RE) can occur. The source of the chlorine ion being the negatively charge section of the addition compound formed in the previous step by the sigma bonding. Once the chlorine ion is substituted to the oxygen, the adduct compound is destroyed. A new Lewis acid-chlorine$_{(x-1)}$-OR compound is formed and one chlorine ion is added to the coordination sphere of the Ln ion As chlorination proceeds, an additional Lewis acid-chlorine-OR compound is formed. This compound is continuously destroyed to reform the gaseous Lewis acid compound and to produce $CO_2$. This reaction is driven by the presence of $Cl_2$ and a carbonaceous reducer as reactants in the chlorination reactor.

The choice of the Lewis acid compound is also based on its capacity to combine effectively with fluorine anions, the fluorine ions being able to effectively increase $\pi$ bonding of the selected Lewis acid compound. Therefore, presence of fluorine ions in the chlorination reactor will react with the selected Lewis acid compound to obtain replacement of the chlorine atoms by fluorine atoms. Thus, fluorine atoms are driven outside the chlorination reactor as a fluorinated compound of the Lewis acid employed since this compound is very volatile.

The reactions described above happen concurrently in the chlorination reactor where the Lewis acid compound will act as a catalyst for the dry chlorination reactions.

For a mixed Monazite and Bastnaesite ore concentrate, the principal chemical equations involved during the dry chlorination process in the presence of a carbonaceous reducer are:

(1)

$$LnPO_4 + 3C + 3Cl_2 \text{ ---» } LnCl_3 + POCl_3 + 3CO$$

(2)

$$LnPO_4 + 1.5C + 3Cl_2 \text{ ---» } LnCl_3 + POCl_3 + 1.5 \, CO_2$$

(3)

$$LnFCO_3 \text{ ---» } LnFO + CO_2$$

(4)

$$3LnFO + \text{Lewis acid-}Cl_3 \text{ ---» } 3LnClO + \text{Lewis acid-}F_3$$

(5)

$$LnClO + C + Cl_2 \text{ ---» } LnCl_3 + CO$$

(6)

$$LnClO + 0.5C + Cl_2 \text{ ---» } LnCl_3 + 0.5CO_2$$

Monazite is recognized as a source of thorium and uranium. Thus, if these elements are present in the feed material, the chlorination reactions are:

(7)

$$Th_3(PO_4)_4 + 12C + 12Cl_2 \text{ ---» } 3ThCl_4 + 4POCl_3 + 12CO$$

(8)

$$Th_3(PO_4)_4 + 6C + 12Cl_2 \text{ ---» } 3ThCl_4 + 4POCl_3 + 6CO_2$$

(9)

$$U_3(PO_4)_4 + 12C + 12Cl_2 \text{ ---» } 3UCl_4 + 4POCl_3 + 12CO$$

(10)

$$U_3(PO_4)_4 + 6C + 12Cl_2 \text{ ---» } 3UCl_4 + 4POCl_3 + 6CO_2$$

If the fluoride ions are not removed using a defluorination process, such as the one described above, fluorination reactions will occur. Examples for LnOF are:

(11)

$$LnOF + C \text{ ---» } LnF_3 + CO$$

(12)

$$LnOF + C \text{ ---» } LnF_3 + 0.5CO_2$$

Once the $LnF_3$ compounds are formed in the chlorination reactor, they cannot be chlorinated since the gain in enthalpy provided by the formation of CO or $CO_2$ is no longer available and a Ln-F bond is stronger than a Ln-Cl bond.
The concentration of $CO_2$ or CO or a mixture of $CO_2$ and CO during the chlorination reactions is controlled by the Boudouard reaction:
(13)

$$C(s) + CO_2(g) \text{ ---» } 2CO(g)$$

When a solid carbonaceous reducer is employed, $CO_2$ is the major carbon gaseous compound formed at temperatures ranging between about 400 °C to 600 °C, at higher temperature, reaction (13) is favoured and CO becomes the principal carbon species (Korshunov, B. J., 1992, Metallurgical Review of MMIJ, vol. 8, No. 2, pp. 1-33).
Except reactions (3) and (4), all the chlorination reactions identified above are catalysed by the presence of a Lewis acid. Generally, the catalytic effect of the Lewis acid can be represented for $BCl_3$ as the Lewis acid and $LnPO_4$ as the rare earth mineral by the reactions:

(14)

$$LnPO_4 + BCl_3 \text{ ---» } LnCl_3 + BPO_4$$

(15)

$$BPO_4 + 3C + 3Cl_2 \text{ ---» } BCl_3 + POCl_3 + 3CO$$

(16)

$$BPO_4 + 1.5C + 3Cl_2 \text{ ---» } BCl_3 + POCl_3 + 1.5CO_2$$

For LnOCl produced by reaction (4), the catalytic effect can be represented by the reactions:

(17)

$$3LnOCl + 2BCl_3 \text{ ---» } 3LnCl_3 + B_2O_3$$

(18)

$$B_2O_3 + 3C + 3Cl_2 \text{ ---» } 2BCl_3 + 3CO$$

(19)

$$B_2O_3 + 1.5C + Cl_2 \text{ ---» } BCl_3 + 1.5CO_2$$

Boron compounds, such as and without being limitative $BCl_3$, $BF_3$, are common examples of Lewis acids. For dry chlorination procedures, $BCl_3$ can be a suitable choice for several reasons. Amongst other, it can be introduced in the chlorination reactor as a gas without pre-heating. The boron oxide compounds formed during the catalytic step are constantly chlorinated to re-form $BCl_3$ and $BCl_3$ will exit the reactor as a gas and due to its low boiling point and, thus, will not obstruct the conduits. Furthermore, $BCl_3$ does not form complex compounds with other chlorides such as $AlCl_3$, $FeCl_3$, $LnCl_3$ and will not induce unwanted chemical vapour transport of rare earth species (Schafer, H., 1983, Advances in inorganic and radiochemistry, Vol. 26, pp. 210-234). In a dry chlorination process wherein the feed material includes Monazite and Bastnaesite concentrates, a defluorination step is suitable. Boron compounds are known defluorination agents and are reported to complex fluorides ions in solution as $BF_4^-$ (Cotton, F.A., and Wilkinson, G., 1972, Advanced in inorganic chemistry, Interscience Publishers, 1145 p.). Therefore, in the process described above, boron compounds and,

in particular, $BCl_3$ are used as both a Lewis acid to catalyse chlorination reactions and as a defluorination agent to extract fluoride ions from the produced chloride mixture.

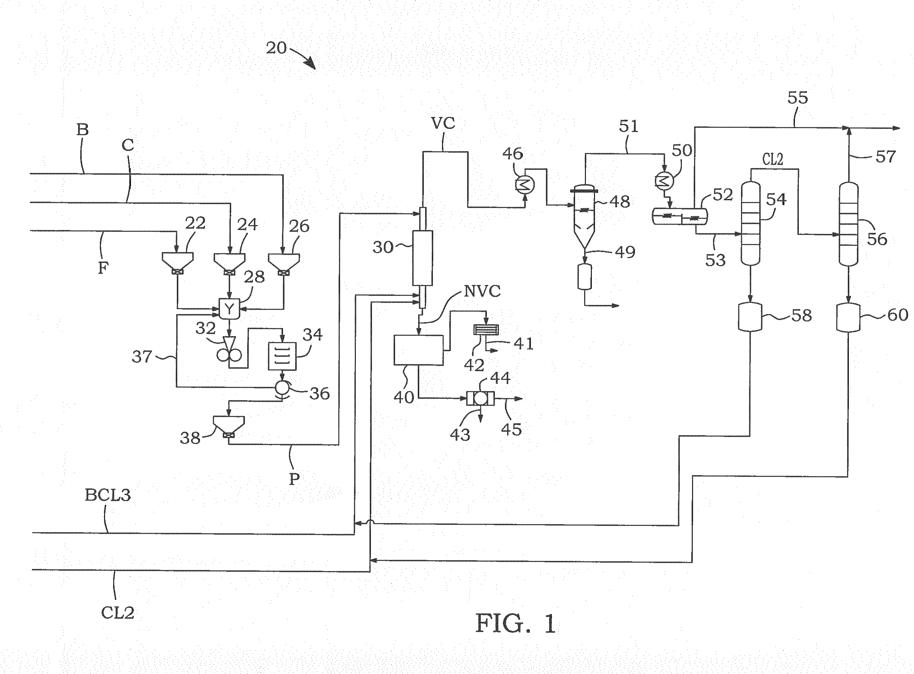

Referring now to Figs. 1 to 4, embodiments of the process for producing anhydrous rare earth chlorides will be described. As mentioned above, in the process, the rare earth mineral phases are converted under their chloride forms and, more particularly, under their dry anhydrous chloride forms.

In an embodiment, the feed material of the process is a rare earth concentrate obtained by a concentration process such as flotation of a grinded ore and the like. As mentioned above, it is possible to use directly an ore including rare earths, without a preconcentration process, as a feed material.

The feed material is dried and, if necessary, it can be comminuted to an appropriate particle size ranging from a few micrometres to millimetre depending on the chlorination reactivity of the feed material. In an embodiment, the feed material particles range between about 10 $\mu$m to 1000 $\mu$m.

THE FEED MATERIAL AND THE REACTANTS

In a chlorination process for a feed material including rare earths and, more particularly, for a feed material including a mixture of Bastnaesite and Monazite, four chemical reactants can be added to the chlorination reactor in addition to the feed material. Firstly, a chlorine supply (or a source of chlorine ions) which is consumed during the chlorination process. The chlorine supply can include gaseous $Cl_2$. Secondly, the reactant includes a carbonaceous reducing agent (or carbonaceous reducer), which is an organic compound rich in carbon and which will undergo oxidation during the chlorination process. The carbonaceous reducer will also act as an oxygen fixing compound. As mentioned above, the carbonaceous reducer can be provided in a solid state or a gaseous state. For instance and without being limitative, the carbonaceous reducer can include gaseous carbon monoxide (CO), activated charcoal, activated carbon, charcoal (wood), coal, coke, and graphite. In an alternative embodiment, $CCl_4$ can be used as a combined chlorine source and carbonaceous reducing agent. Thirdly, the reactant also includes a Lewis acid compound acting has a catalyst to activate the substitution of an oxygen carrying ligand for a chlorine ion. Fourthly, the reactant also includes a defluorination agent, to complex fluorine ions present in the rare earth concentrate to be chlorinated. As mentioned above, a single reactant can be used as a combined agent. For instance, $CCl_4$ can be used as a combined chlorine source and carbonaceous reducing agent. Similarly, in the embodiments shown in Figs. 1 to 4, $BCl_3$ is selected as a combined Lewis acid and defluorination agent. $BCl_3$ can be produced from its oxide forms $B_2O_3$, $H_3BO_3$, $Na_2B_4O_7$ and other oxides containing boron by chlorination procedures using $Cl_2$ and a carbonaceous reducer. Therefore, since a chlorine agent and a carbonaceous reducer are also added as reactants, any suitable method for adding boron compounds to the process can be applied knowing that the boron compounds will undergo chlorination to $BCl_3$ by the chlorine agent. For instance and without being limitative, these methods include adsorption of boron compounds to the carbonaceous reducer, direct or indirect addition in a solid state to the feed material, injection as vapors, and the like.

LOW TEMPERATURE CHLORINATION WITH A SOLID CARBONCEOUS REDUCER

A first embodiment of the process will now be described in reference to Fig. 1 wherein the chlorination process 20 is performed at a relatively low reaction temperature in the presence of a solid carbonaceous reducer. As mentioned above, the feed material is a mixture of Bastnaesite and Monazite.

Pelletization

The feed material (F), including the Bastnaesite and Monazite mixture, and the solid carbonaceous reducer (C) are directed to storage bins 22, 24 as dry products. In the embodiment shown in Fig. 1, the feed material (F) is a flotation concentrate including rare earths and the solid carbonaceous reducer (C) is activated charcoal. In some embodiments, the feed material (F) and the solid carbonaceous reducer (C) can be pelletized together as pellets having a diameter ranging between about 1 mm to about 10mm before their introduction in the chlorination reactor 30. Pelletization reduces transportation of fine particles, facilitates the flow of the feed material in the chlorination reactor 30, and increases the contact between the feed material, the solid carbonaceous reducer, and the gaseous reactants. The pellets (P) can be produced according to already existing process by the mixing of a binder agent (B), contained in a binding agent storage bin 26, to the powdered feed material and the solid carbonaceous reactant in a suitable mixer 28. The mixing step can be followed by the production of pellets in a pelletizer 32, such as and without being limitative, a rotary disk. The pellets (P) are conveyed through a belt dryer 34 and afterward to an oscillating screen 36 where the non-pelletized material 37 is returned to the mixer 28. The dry pellets (P) are directed to a storage bin 38.
In an embodiment, the belt dryer 34 and the oscillating screen 36 operate under an inert atmosphere, such as under a $N_2$ atmosphere. The drying step is carried out under an inert atmosphere to avoid hydration of the feed material. Water contained in the feed material can interfere with the chlorination reactions that will be carried out in the chlorination reactor.
It is appreciated that other suitable methods and apparatuses can be used to pelletize the feed material (F) and the solid carbonaceous reducer (C), if any.
It is also appreciated that, in some implementations, the feed material (F) and the solid carbonaceous reducer (C), if any, can be fed directly in the chlorination reactor without being pelletized.

Chlorination

The pellets P are introduced in the chlorination reactor 30. The chlorination reactor 30 is also supplied with gaseous reactants and, more particularly, $BCl_3$ and $Cl_2$ in gaseous state. As mentioned above, the chlorination reactor 30 is manufactured from a material resistant to the corrosive nature of the gases contained therein. For instance, the reactor 30 can be a rotary kiln, a fluidised bed or a static reactor. In the embodiment shown in Fig. 1, the chlorination reactor 30 is a vertical static reactor. The temperature within the chlorination reactor 30 is controlled and the predetermined chlorination temperature is selected based on the feed material. In an embodiment, the chlorination temperature can vary between about 300 °C to about 700 °C, and in a particular embodiment, between about 500 °C to about 600 °C. The chlorination reaction produces two groups of chlorides, which are designated as the volatile chlorides (VC) and the non-volatile chlorides (NVC). The volatile chlorides (VC) encompass all the chloride compounds with boiling points below or equal to the chlorination temperature maintained in the chlorination reactor 30 during the chlorination reaction. The volatile chlorides (VC) include compounds such as but without being limited to, $POCl_3$, $TiCl_4$, $SiCl_4$, and $FeCl_3$ depending on the predetermined chlorination temperature. They also include unreacted gaseous reactants such as $Cl_2$ and $BCl_3$. The non-volatile chlorides (NVC) include chloride compounds having boiling points above the chlorination temperature. The non-volatile chlorides (NVC) comprise, but without being limited to, $LaCl_3$, $CeCl_3$, $PrCl_3$, $NdCl_3$, $SmCl_3$, $EuCl_3$, $UCl_4$, $ThCl_4$, $YCl_3$, $ZrCl_4$, and KCl.

The volatile chlorides (VC), including unreacted gaseous reactants, are expelled, as a metal choride vapor stream, from the chlorination reactor 30 after the chlorination reaction while non-volatile chlorides (NVC) remain in the chlorination reactor 30.

Distillation of thorium and uranium chlorides

As mentioned above, the feed material and, more particularly, the Bastnaesite and Monazite mixture comprises thorium and uranium. In the present embodiment, the boiling point of the thorium and uranium chlorides is above the chlorination temperature and they are thus included in the non-volatile chlorides (NVC).

At the end of the chlorination reaction, the non-volatile chlorides (NVC) are removed by a suitable equipment from the chlorination reactor 30 in a liquid state and directed to a distillation furnace 40, i.e. a high boiling point chloride furnace.

To liquefy the non-volatile chlorides, the chlorination process can be stopped and the temperature in the chlorination reactor 30 can be raised to a predetermined temperature selected to permit the liquefaction of the non-volatile chlorides without allowing the vaporisation of $ThCl_4$ and $UCl_4$. The liquefaction is carried in an inert atmosphere, such as under a $N_2$ atmosphere, to prevent oxidation and hydration of the chlorides. Once the non-volatile chlorides (NVC) have been transferred to the distillation furnace 40, which is also maintained under an inert atmosphere, the temperature in the distillation furnace 40 is raised to a temperature slightly higher than the boiling point of $ThCl_4$ allowing the selective vaporisation of $ThCl_4$ and $UCl_4$ which are recovered in a proper condensation vessel 42 (or condenser) as a $ThCl_4$ and $UCl_4$ concentrate 41. $ThCl_4$ and $UCl_4$ and eventual high boiling chloride compounds, such as $MnCl_2$, present as impurities in the rare earth chloride concentrate can be separated by further distillation or by ion exchange procedures or solvent extraction (not shown).

Molten salt filtration

After the above-described $ThCl_4$ and $UCl_4$ distillation step, the non-volatile chlorides (NVC) contain essentially the rare earth chlorides, the alkaline earth chlorides, the alkaline chlorides, and the unreacted carbonaceous reducer. The carbonaceous reducer is separated from the chloride compounds by a molten salt filtration procedure in a molten chloride filter 44. The recovered unreacted carbonaceous reducer 43 (in the present embodiment, unreacted activated charcoal) can be returned as reactant into the chlorination reactor 30 or disposed adequately. Following the molten salt filtration, an anhydrous rare earth concentrate 45 (in the present embodiment, a mixture of anhydrous rare earth chlorides and alkaline earth and alkaline chlorides) is obtained and can be further processed by fused salt electrolysis or ion exchange or solvent extraction, as it is known in the art.

Volatile chlorides (VC)

As mentioned above, the volatile chlorides (VC) are carried outside the chlorination reactor 30 during the chlorination reaction by the flow of unreacted gaseous reactants, such as $Cl_2$ and $BCl_3$, which are also volatile chlorides. They are directed towards a condenser unit 46 in which the temperature is set to condense the volatile chlorides (VC) as solid or liquid depending on their specific boiling points and separate them from the unreacted $BCl_3$, $Cl_2$, and $BF_3$. $BF_3$ is generated by the defluorination procedure (see reaction (4) above). The condenser unit 46 is linked to a settler tank 48 where the mixture including solid, liquid, and gas is separated into two fractions. The first fraction is a metal chloride slurry 49 composed of chloride compounds in a mixed solid-liquid state. More particularly, the slurry includes solid chlorides such as $TaCl_5$, $FeCl_3$, $ZrCl_4$, $AlCl_3$, $NbCl_5$, and $PCl_5$ and liquid chlorides such as $POCl_3$, $PCl_3$, $TiCl_4$, and $SiCl_4$. This solid-liquid slurry settles to the bottom of the settler tank 48. If wanted, the solid-liquid slurry can be sent for storage or can be further processed to extract additional values.

The second gaseous fraction 51 is a gaseous phase containing essentially $BCl_3$, $Cl_2$, $BF_3$, CO, and $CO_2$. The gaseous phase 51 is conducted towards a second condenser 50 in which the temperature is adjusted to selectively condense $BCl_3$ and $Cl_2$ and obtain a liquid-gas mixture. The liquid-gas mixture is then transported to a condenser receiver 52 where the liquid phase or fraction including $BCl_3$ and $Cl_2$ 53 is separated from the gaseous phase or fraction including $BF_3$, CO, and $CO_2$ 55.

The gaseous phase 55, composed of $BF_3$, CO and $CO_2$, is directed to an appropriate scrubber (not shown) or a burner/scrubber unit (not shown), where $BF_3$ is reacted for example with $Ca(OH)_2$ to produce insoluble $CaF_2$ and $B(OH)_3$. $B(OH)_3$ can be recycled to the chlorination reactor 30 as a Lewis acid compound. The liquid phase 53 including $BCl_3$ and $Cl_2$ is carried to a set of two (2) fractional distillation columns 54, 56. In the first fractional distillation column 54, $BCl_3$ is separated from $Cl_2$, stored in a $BCl_3$ storage tank 58 and can be recycled to the chlorination reactor 30 as a gaseous reactant. In the second fractional distillation column 56, $Cl_2$ is separated from residual volatile chlorides 57, stored in a $Cl_2$ storage tank 60 and can be recycled to the chlorination reactor 30 as a reactant. The residual volatile chlorides 57 are directed to an appropriate burner/scrubber unit, and the residues are securely disposed.

LOW TEMPERATURE CHLORINATION WITH A GASEOUS CARBONACEOUS REDUCER

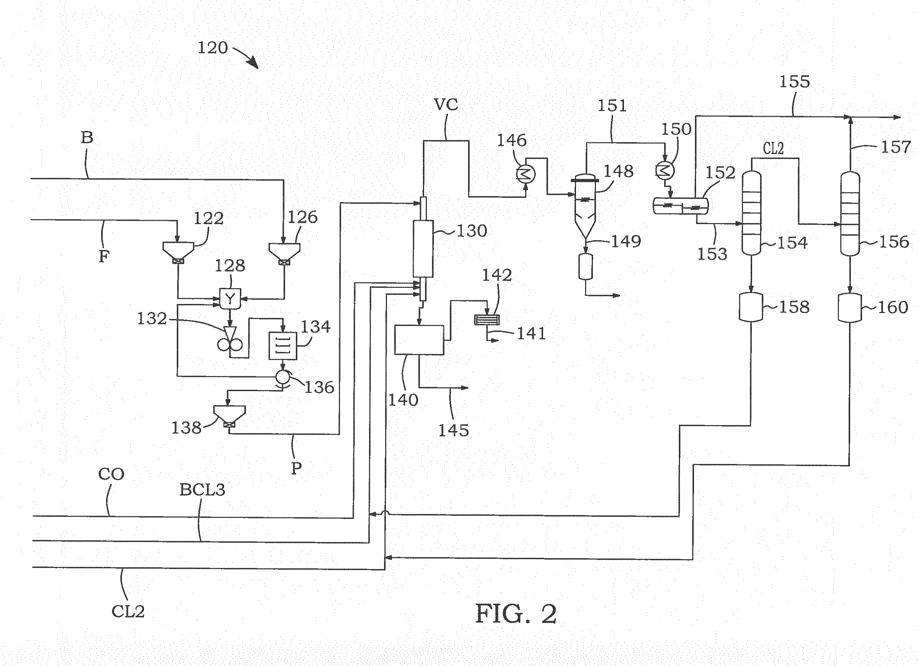

Referring now to Fig. 2, there is shown an alternative implementation of the chlorination process 120 wherein the solid carbonaceous reducer of the embodiment shown in Fig. 1 is replaced with a gaseous carbonaceous reducer and, more particularly, gaseous carbon monoxide (CO). In the embodiment of Fig. 2, the features are numbered with reference numerals in the 100 series which correspond to the reference numerals of the previous implementation.

In the pelletization step, the binding agent (B) is mixed with the powdered feed material (F), without addition of a solid carbonaceous reducing agent. The carbon monoxide (CO) is added directly at a base of the chlorination reactor 130 during the chlorination process 120. The binding agent (B) and the feed material (F) can be contained respectively in storage bins 126, 122, before being mixed together in mixer 128, pelletized as pellets (P) in pelletizer 132, dried in dryer 134, screened in oscillating screen 136, optionally stored in storage bin 138. In this embodiment, the process is free of molten chloride filtration step since the reactants do not include a solid carbonaceous reducer, which can partly unreact during the chlorination reaction. Thus, the mixture 145 including the anhydrous rare earth, alkaline, and alkaline earth chlorides is obtained directly from the high boiling point chloride furnace 140 (or distillation furnace). The other process steps are similar to the one described above in reference to Fig. 1.

More particularly, a $ThCl_4$ and $UCl_4$ concentrate 141 is also recovered as output of a condensation vessel 142 (or condenser), mounted downstream the distillation furnace 140. The volatile chlorides (VC) exiting the chlorination reactor 130 are condensed in a condenser unit 146 and separated in a settler tank 148 into two fractions. The first fraction is a metal chloride slurry 149 composed of chloride compounds in a mixed solid-liquid state, which settles to the bottom of the settler tank 148 and is then sent for storage or can be further processed to extract additional values. The second gaseous fraction 151, containing essentially $BCl_3$, $Cl_2$, $BF_3$, CO, and $CO_2$, is conducted towards a second condenser 150 to obtain a liquid-gas mixture which is then transported to a condenser receiver 152 where the liquid phase or fraction including $BCl_3$ and $Cl_2$ 153 is separated from the gaseous phase or fraction including $BF_3$, CO, and $CO_2$ 155. The gaseous phase 155 is then directed to an appropriate scrubber (not shown) or a burner/scrubber unit (not shown), as detailed above in reference to Fig. 1.

The liquid phase 153 is carried to a set of two (2) fractional distillation columns 154, 156 to first separate $BCl_3$ from $Cl_2$ and $Cl_2$ from residual volatile chlorides 157. The $BCl_3$ and the $Cl_2$ can be stored in a $BCl_3$ storage tank 158 and a $Cl_2$ storage tank 160, respectively, and/or recycled to the chlorination reactor 130 as a reactant. The residual volatile chlorides 157 are directed to an appropriate burner/scrubber unit, and the residues are securely disposed.

HIGH TEMPERATURE CHLORINATION WITH A SOLID CARBONACEOUS REDUCER

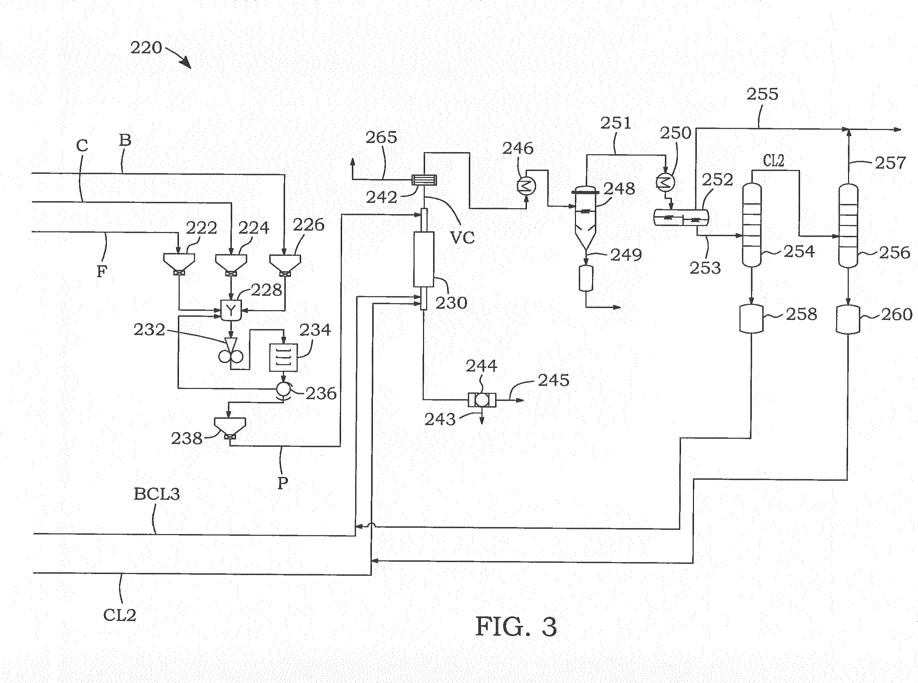

In Figs. 1 and 2, the chlorination step is carried out at a chlorination temperature sufficiently low to avoid distillation of thorium and uranium while the material is in the chlorination reactor 30, 130. Referring now to Fig. 3, there is shown an alternative implementation of the chlorination process 220 wherein the temperature in the chlorination reactor 230 is above the boiling point of the thorium and uranium chlorides, but substantially below the boiling point of the rare earth chlorides. In the embodiment of Fig. 3, the features are numbered with reference numerals in the 200 series which correspond to the reference numerals of the previous implementations.

In the alternative embodiment shown in Fig. 3, the chlorination temperature is adjusted so that the distillation of thorium and uranium chlorides is carried out during the chlorination reaction but at temperatures avoiding or at least minimising the distillation of rare earth chlorides. As in the implementation shown in Fig. 1, a solid carbonaceous reducing agent (C) is added to the feed material (F). Due to the higher chlorination temperature, a few modifications are required to the chlorination process 20 described above in reference to Fig. 1.

The apparatus and associated process 220 does not require a distillation furnace to separate the thorium and uranium chlorides from the rare earth, alkaline earth, and alkaline chlorides. The thorium and uranium chlorides leave the chlorination reactor 230 as volatile chlorides (VC) with the other volatile chlorides, including the unreacted gaseous reactants.

A thorium-uranium condenser 242 is added downstream the chlorination reactor 230 to separate efficiently the thorium and uranium chlorides, as a thorium chloride concentrate 265, from the other volatile chlorides, including the unreacted gaseous reactants. All the other steps related to the pelletization, molten salt filtration, volatile chloride treatment, gases recycling and scrubbing are similar to those already described for the embodiments described above in reference to Fig. 1.

More particularly, the binding agent (B), the solid carbonaceous reducing agent (C), and the feed material (F) can be contained respectively in storage bins 226, 224, 222, before being mixed together in mixer 228, pelletized as pellets (P) in pelletizer 232, dried in dryer 234, screened in oscillating screen 236, optionally stored in storage bin 238.

Chlorination procedure

For this embodiment, the chlorination reactor temperature is maintained between about 700 °C and about 1000 °C and, in a particular embodiment, between about 800 °C and about 950 °C. Thorium and uranium chlorides are extracted from the chlorination reactor 230 as volatile chlorides and are mixed with the other chlorides volatilised at these temperatures.

Thorium-uranium chloride condenser

The apparatus 220 includes a thorium-uranium chloride condenser 242 to separate the thorium and uranium chlorides from the other volatile chlorides. The thorium-uranium condenser 242 is positioned near the exit of the chlorination reactor 230 as shown in Fig. 3. The volatile chlorides escaping the chlorination reactor 230 are directed in the thorium-uranium condenser 242. The vessel of the thorium-uranium condenser 242 is made in a material resistant to the corrosive nature of the gases mixture. The temperature of the thorium-uranium condenser 242 is maintained so that the condensation of solids $ThCl_4$ and $UCl_4$ occurs selectively from the other volatile chlorides, such as and without being limitative $TaCl_5$, $FeCl_3$, $ZrCl_4$, $AlCl_3$, $NbCl_5$, and $PCl_5$. The temperature of the thorium-uranium condenser 242 is controlled so that the gases entering the thorium-uranium condenser 242 are cooled to around 400 °C within the vessel. The internal walls of the condenser 242 are equipped with baffles to trap efficiently the fine particles in order to circumvent their transportation in the downstream steps of the process. In an embodiment, the bottom part of the condenser 242 is designed in a cylindrical fashion to facilitate the sedimentation of the fine particles and their recovery. The subsequent steps of the volatile chloride treatment, gases recycling, and scrubbing are similar to those described above in reference to Figs. 1 and 2.

Among the volatile chlorides susceptible to be produced during the chlorination step of mineral concentrates rich in rare earths and having condensation points similar to $ThCl_4$ and $UCl_4$, only manganese chloride ($MnCl_2$) can potentially condense along thorium and uranium chlorides. If needed, the manganese can be separated from uranium and thorium chlorides. $Mn^{+2}$ has a chemical behaviour very different from $Th^{+4}$ and $U^{+4}$ when coulombic interactions are involved in a given separation process such as in ion exchange procedure.

The gaseous mixture exiting the condenser 242 is directed to condenser unit 246 and separated in a settler tank 248 into a metal chloride slurry 249, composed of chloride compounds in a mixed solid-liquid state, and a second gaseous fraction 251, containing essentially $BCl_3$, $Cl_2$, $BF_3$, CO, and $CO_2$. The gaseous fraction 251 is conducted towards a second condenser 250 to obtain a liquid-gas mixture which is then transported to a condenser receiver 252 where the liquid phase or fraction including $BCl_3$ and $Cl_2$ 253 is separated from the gaseous phase or fraction including $BF_3$, CO, and $CO_2$ 255. The gaseous phase 255 is then directed to an appropriate scrubber (not shown) or a burner/scrubber unit (not shown), as detailed above in reference to Fig. 1.

The liquid phase 253 is carried to a set of two (2) fractional distillation columns 254, 256 to first separate $BCl_3$ from $Cl_2$ and $Cl_2$ from residual volatile chlorides 257. The $BCl_3$ and the $Cl_2$ can be stored in a $BCl_3$ storage tank 258 and a $Cl_2$ storage tank 260, respectively, and/or recycled to the chlorination reactor 230 as a reactant. The residual volatile chlorides 257 are directed to an appropriate burner/scrubber unit, and the residues are securely disposed.

The anhydrous rare earth chloride concentrate produced during the chlorination step is extracted from the chlorination reactor 230 and directed toward the molten salt filtration unit 244 to remove the unreacted solid carbonaceous reducing agent 243. After the filtration procedure, the anhydrous chloride concentrate 245 is ready for subsequent metallurgical refining procedures including molten salt electrolysis, or separation by ion exchange using suitable solvents or resins as shown in Fig. 3. As mentioned above, the high boiling point chloride furnace and the associated condensing stage are eliminated in the present embodiment since the thorium and uranium chlorides are extracted from the chlorination reactor 230 as volatile chlorides.

HIGH TEMPERATURE CHLORINATION WITH A GASEOUS CARBONACEOUS REDUCER

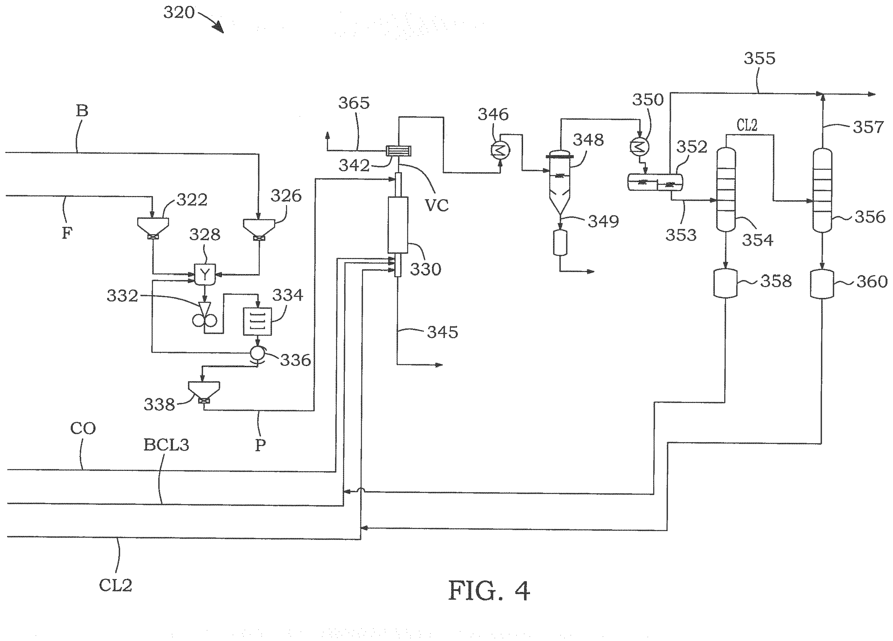

Referring now to Fig. 4, there is shown an alternative implementation of the chlorination process 320 wherein the solid carbonaceous reducer of the embodiment shown in Fig. 3 is replaced with a gaseous carbonaceous reducer (CO) and, more particularly, gaseous carbon monoxide (CO). In the embodiment of Fig. 4, the features are numbered with reference numerals in the 300 series which correspond to the reference numerals of the previous implementations.

When a gaseous carbonaceous reducing agent is used as a replacement of a solid carbonaceous reducer, as described above in reference to Fig. 2, the process is simplified since it is no longer necessary to add the solid carbonaceous reducer at the pelletization stage. Only a binding agent (B) is employed in combination with the rare earth ore or concentrate (F). Furthermore, the molten salt filtration procedure, downstream the chlorination reactor 330, is removed. The other steps are similar to those already described above in reference to the high temperature chlorination using a solid carbonaceous reducer as shown in Fig. 3.

In an implementation, the system can comprises a thorium and/or uranium condenser 342 downstream the chlorination reactor 330, to recover the thorium and/or uranium chlorides 365 contained with the volatile chlorides (VC), i.e. the gaseous products of the chlorination reactor 330, and a thorium and/or uranium distillation unit, downstream the chlorination reactor, to recover the thorium and/or uranium chlorides contained in the anhydrous non-volatile chlorides. This implementation can be adapted to a chlorination reactor 330 operating at a chlorination temperature close to the boiling point of thorium and/or uranium chlorides. For instance and without being limitative, it can be a suitable system configuration if the chlorination temperature is above 700 °C and below 1000 °C.

In the embodiment shown, the chlorination system includes storage bins 326, 322 for storing the binding agent (B) and the rare earth flotation concentrate (F), respectively, before being mixed together in mixer 328, pelletized as pellets (P) in pelletizer 332, dried in dryer 334, screened in oscillating screen 336, optionally stored in storage bin 338.

The anhydrous rare earth chloride concentrate 345 is extracted from the chlorination reactor 230 and the volatile chlorides (VC) including the thorium and/or uranium chlorides is sent to the thorium and/or uranium condenser 342, as detailed above. The volatile chlorides (VC) exiting the thorium and/or uranium condenser 342 are directed to condenser unit 346 and separated in a settler tank 348 into a metal chloride slurry 349, composed of chloride compounds in a mixed solid-liquid state, and a second gaseous fraction 351, containing essentially $BCl_3$, $Cl_2$, $BF_3$, CO, and $CO_2$. The gaseous fraction 351 is conducted towards a second condenser 350 to obtain a liquid-gas mixture which is then transported to a condenser receiver 352 where the liquid phase or fraction including $BCl_3$ and $Cl_2$ 353 is separated from the gaseous phase or fraction including $BF_3$, CO, and $CO_2$ 355. The gaseous phase 355 is then directed to an appropriate scrubber (not shown) or a burner/scrubber unit (not shown), as detailed above in reference to Fig. 1.

The liquid phase 353 is carried to a set of two (2) fractional distillation columns 354, 356 to first separate $BCl_3$ from $Cl_2$ and $Cl_2$ from residual volatile chlorides 357. The $BCl_3$ and the $Cl_2$ can be stored in a $BCl_3$ storage tank 358 and a $Cl_2$ storage tank 360, respectively, and/or recycled to the chlorination reactor 330 as a reactant. The residual volatile chlorides 357 are directed to an appropriate burner/scrubber unit, and the residues are securely disposed.

EXPERIMENTAL SYSTEM

The chlorination reactor used for carrying out the experiments includes a horizontal tube furnace in which is inserted a quartz tube having an internal diameter of 22 mm, an external diameter of 25 mm, and a length of 92 cm or 122 cm depending on the tube used for a given experiment.

The sample is located in a graphite vessel, inserted in the quartz tube, at the beginning of each experiment. One extremity of the quartz tube is fitted with a flexible stainless steel gas line linked to mass flow controllers. The mass flow controllers are connected to three gas bottles and, more particularly, $Cl_2$, $BCl_3$ and $N_2$. The other extremity of the quartz tube is attached to a volumetric flask containing 800 ml of a 50 wt% NaOH solution acting as a scrubber for the volatile chlorides and the unreacted gaseous $Cl_2$ and $BCl_3$. The mass flow controllers are controlled via a computer. The entire system, including the gas cylinders, is placed under two (2) Plexiglas ventilated hoods.

A mixed Bastnaesite and Monazite concentrate was obtained from the Iamgold Corporation. The concentrate was produced by a flotation process. The analysis of the concentrate is presented in Table 1 below. The mixed Bastnaesite and Monazite concentrate was divided in aliquot parts of one gram using a fraction separator. One gram (g) of concentrate, weighted precisely, was mixed with 1 g of activated charcoal, acting as solid carbonaceous reducer, weighted precisely, and placed in the graphite vessel. The graphite vessel was inserted in the quartz tube and the assembly was introduced in the furnace. The sample was dried under nitrogen for one hour at 500 °C. After the drying stage, the temperature of the furnace was raised to the selected experiment temperature and a reactant gas mixture was allowed to flow in the tube according to the experimental conditions assigned for the given experiment. In selected experiments, the solid carbonaceous reducer was replaced by CO. In these cases, CO was added directly to the reactant gas mixture from a gas cylinder equipped with the necessary gas regulator and flow controller. The reaction was rapid with production of volatile chlorides escaping from the furnace and condensing on the internal surface of the tube along the decreasing temperature gradient. At the end of the experiment, the chlorination reactor was supplied in nitrogen to flush the system instead of the reactant gases. The tube was cooled down to room temperature under nitrogen. The graphite vessel was extracted from the quartz tube and the solid powder was weighed, placed in a sample bottle and labeled. The quartz tube was washed with 100 ml of distillated water. The solids condensed on the tube's internal surface were all very soluble in water as an indirect indication of their chloride form. The washing liquid was kept in a Nalgene bottle and labeled accordingly.

Table 1: Chemical analysis of the flotation concentrate Bastnaesite-Monazite used as feed material.

| $La_2O_3$ | 7.1 wt% | CaO | 9.5 wt% |
|---|---|---|---|
| $CeO_2$ | 13.8 wt% | MnO | 1.0 wt% |

(continued)

| Pr$_6$O$_{11}$ | 1.5 wt% | MgO | 4.1 wt% |
|---|---|---|---|
| Nd$_2$O$_3$ | 5.1 wt% | Fe$_2$O$_3$ | 15.9 wt% |
| Y$_2$O$_3$ | 0.1 wt% | ThO$_2$ | 0.6 wt% |
| Sm$_2$O$_3$ | 0.6 wt% | Pb$_2$O$_5$ | 5.3 wt% |
| Eu$_2$O$_3$ | 0.1 wt% | SiO$_2$ | 2.3 wt% |
| Gd$_2$O$_3$ | 0.3 wt% | PAF | 27.3 wt% |

A specific analytical procedure was elaborated for the analysis of the samples resulting from the chlorination experiment. Two types of residues were produced by the chlorination experiments: (a) a *solid residue* containing the chlorides which were not volatilized during the experiments and (b) a *liquid residue* representing the chlorides volatilized during a given test. The solid residue was mainly composed of non-volatile compounds and activated charcoal. The term *liquid residue* is due to the fact that the internal wall of the tube containing the condensed volatile compounds at the end of a specific chlorination reaction test were washed with water, the liquid obtained being referred to as *liquid residue.*

*Solid residue chlorination experiment.*

The solid residue was grounded in an agate mortar to obtain a fine powder and separated using a fraction separator. A given amount of the residue was leached in 0,1 N HCl, filtered and the clear solution was transferred to a 100 ml Erlenmeyer, the solution was completed to the line and analyzed by ICP-AES/MS for a selected group of elements including the rare earths. A 0,1g portion of the filtered solid was submitted to a LiBO$_5$ fusion; the resulting molten paste was dissolved in 1 M mix HCl, HNO$_3$ and analyzed by ICP-AES/MS. The results were interpreted according to the following: rare earths dissolved in the 0,1 N HCl solution were inferred as chlorides; rare earths still present at the fusion stage were inferred as fluorides or unreacted material.

*Liquid residue chlorination experiment.*

The solution was completed to 400 ml and acidified with concentrated HCl to obtain a final concentration of 0,1 N. The solution was analyzed by ICP-AES/MS. The conversion rate of the rare earth species into the chlorides was calculated from the rare earth concentration still present in the solid residue and the residual rare earth concentration, after the leaching procedure with 0,1 N HCl described above. This relates to the equation:

$$100\,\% - \frac{residual\ rare\ earths\ concentration}{initial\ concentration\ of\ rare\ earths} \times 100 = \text{Conversion rate as chlorides, in }\%.$$

EXAMPLES

The experimental parameters used and the results are reported in Table 2 below. The term "*Boat material*" refers to the material from which the boat (or vessel) inserted in the chlorination reactor was made of. The term "*RE source*" indicates the type of the rare earth material used as feed material. The term "*Catalyst*" denotes the type of Lewis-acid used as reactant. The term "*Others*" corresponds to additional chemical compounds or experimental conditions, if employed. The term "*Reducer*" indicates the kind of carbonaceous reducer added to the chlorination reactor. The expression "*Rare Earth chloride recovery in the reactor*" corresponds to the quantity of rare earth converted into chlorides and present inside the vessel placed in the center of the chlorination furnace. This corresponds to the quantity of rare earths leached by HCl 0,1 N and inferred to be under a chloride form because of their solubility in diluted aqueous acid as opposed to phosphates, fluoro-carbonates, and fluorine compounds which are insoluble in diluted acids. For convenience, this quantity was calculated from the difference of the original rare earth concentration present and the one left in the residue after the 0,1 N HCl leaching procedure. The expression "*Rare earth chloride recovery outside the reactor*" designates the quantity of rare earth chlorides (expressed as a percentage of the initial amount) transported outside the chlorination furnace and condensed on the inside wall of the quartz tube along the decreasing temperature gradient outside the hot zone of the furnace. The expression "*Insoluble Rare Earth recovery in the reactor (non-chlorides)*" corresponds to unreacted rare earth quantity or the quantity converted into insoluble fluoride if fluoride ions are still present in the sample as explained above. The expression "*Total Rare Earth conversion rate into chlorides*" was calculated from: 100 % - insoluble rare earth recovery in the reactor (non-chlorides) %. For thorium, the ThCl$_4$ formed during the chlorination reaction was expelled from the chlorination reactor, at temperatures higher than about 700 °C, and condensed on the inside wall of the glass tube, a portion of the volatile thorium reached the scrubber as a fine powder. It was not possible to quantify the thorium reaching the scrubber. The expression "*Thorium chloride recovery outside the reactor*" was therefore calculated, for tests conducted at chlorination temperatures above 700 °C and for all tests including a distillation step, from: 100 % - insoluble thorium recovery in the reactor % (non-chloride) - thorium chloride recovery in the reactor %. For tests carried out at temperatures below or equal to 700 °C, the analytical values were used. The meaning of the expression "*Thorium chloride recovery in the reactor*" is similar to rare earth chloride recovery in the reactor except that it is now applied to thorium. The meaning of the expression "*Insoluble thorium recovery in the reactor (non-chloride)*" is similar to "*Insoluble rare earth recovery in the reactor*" except that it is now applied to thorium. The *Total Thorium conversion rate into chloride* is calculated from: 100 % - Insoluble thorium recovery in the reactor (non-chloride) %.

Table 2: Experimental parameters and results

| # Test | No. Labo test | Boat material | Time (min) | Temperature (°C) | RE source | Particle size $D_{90}$ (um) | Flot. Conc. Quantity dry RE (g) | Catalyst | Catalyst quantity | Others | Reducer | Reducer quantity (g) for solid, (L/min) for gas | $Cl_2$ Flowrate (L/min) | Dry sample weight before chlorination (g) | Dry sample weight after chlorination (g) | Weight loss (%) | Rare Earth chlorides recovery in the reactor (%) | Rare Earth chlorides recovery outside the reactor % | Insoluble Rare Earths recovery in the reactor % (non-chlorides) | Total Rare Earths conversion rate to chlorides % | Thorium chloride recovery outside the reactor % | Thorium chloride recovery in the reactor % | Insoluble Thorium recovery in the reactor % (non-chloride) | Total Thorium conversion rate to chloride % |
|---|---|---|---|---|---|---|---|---|---|---|---|---|---|---|---|---|---|---|---|---|---|---|---|---|
| 1 | 101 | Graphite | 30 | 900 | F. C. lamgold | 13 | 1,057 | $BCl_3$ | 0,1L/min | Ø | AC Darco 20-40 | 1,062 | 0,4 | 2,1189 | 1,6962 | 19,9 | 85% | 0,4% | 15% | 85% | 17% | 44% | 39% | 61% |
| 2 | 103 | Graphite | 30 | 600 | F. C. lamgold | 13 | 1,263 | $BCl_3$ | 0,1L/min | Ø | AC Darco 20-40 | 1,275 | 0,4 | 2,5383 | 2,5200 | 0,7 | 97% | 0,0% | 3% | 97% | 1% | 74% | 25% | 75% |
| 3 | 105 | Graphite | 30 | 700 | F. C. lamgold | 13 | 1,209 | $BCl_3$ | 0,1L/min | Ø | AC Darco 20-40 | 1,213 | 0,4 | 2,4220 | 2,0070 | 17,1 | 97% | 0,1% | 3% | 97% | 8% | 52% | 40% | 60% |
| 4 | 108 | Graphite | 30 | 900 | F. C. lamgold | 13 | 1,264 | $BCl_3$ | 0,1L/min | Ø | AC Darco 20-40 | 0,6350 | 0,4 | 1,8989 | 1,0724 | 43,5 | 90% | 0,9% | 9% | 91% | 34% | 36% | 30% | 70% |
| 5 | 109 | Graphite | 30 | 900 | F. C. lamgold | 13 | 1,247 | $BCl_3$ | 0,1L/min | Ø | AC Darco 20-40 | 0,315 | 0,4 | 1,5614 | 0,4522 | 71,0 | 96% | 0,9% | 3% | 97% | 95% | 2% | 3% | 97% |
| 6 | 113 | Quartz | 30 | 600 | F. C. lamgold | 13 | 1,222 | Ø | Ø | Ø | AC Darco 20-40G | 1,239 | 0,4 | 2,4613 | 2,5099 | -2,0 | 75% | 0,0% | 25% | 75% | 1% | 43% | 56% | 44% |
| 7 | 115 | Quartz | 30 | 500 | F. C. lamgold | 13 | 1,21 | BCl3 | 0,1L/min | Ø | AC Darco 20-40G | 1,226 | 0,4 | 2,4367 | 2,6086 | -7,1 | 89% | 0,5% | 11% | 89% | 1% | 41% | 58% | 42% |
| 8 | 117 | Graphite | 30 | 600 | F. C. lamgold | 13 | 1,193 | $BCl_3$ | 0,1L/min | Ø | AC Darco 20-40G | 0,299 | 0,4 | 1,4917 | 1,2040 | 19,3 | 98% | 0,0% | 2% | 98% | 2% | 64% | 34% | 66% |
| 9 | 118 | Graphite | 60 | 600 | F. C. lamgold | 13 | 1,097 | $BCl_3$ | 0,1L/min | $N_2$, 2 H, 950 °C | AC Darco 20-40G | 0,274 | 0,4 | 1,3709 | 0,8550 | 37,6 | 95% | 3,0% | 2% | 98% | 99% | 1% | 0% | 100% |
| 10 | 119 | Graphite | 60 | 900 | F. C. lamgold | 13 | 1,369 | $BCl_3$ | 0,1L/min | $N_2$, 2 H, 950 °C | AC Darco 20-40G | 0,343 | 0,4 | 1,7123 | 0,8047 | 53,0 | 95% | 3,2% | 1% | 99% | 100% | 0% | 0% | 100% |
| 11 | 120 | Graphite | 30 | 900 | F. C. lamgold | 13 | 1,2037 | $BCl_3$ | 0,1L/min | Ø | AC Darco 20-40 | 0,3010 | 0,4 | 1,5047 | 0,7020 | 53,3 | 97% | 0,6% | 2% | 98% | 87% | 4% | 9% | 91% |
| 12 | 121 | Graphite | 60 | 900 | F. C. lamgold | 13 | 1,212 | $BCl_3$ | 0,1L/min | $N_2$, 2 H, 950 °C | Charcoal (wood) | 0,304 | 0,4 | 1,5154 | 0,1832 | 87,9 | 95% | 4,6% | 0% | 100% | 100% | 0% | 0% | 100% |
| 13 | 122 | Graphite | 60 | 900 | F. C. lamgold | 13 | 1,177 | $BCl_3$ | 0,1L/min | $N_2$, 2 H, 950 °C | CO | 0,4 | 0,4 | 1,1766 | 0,0667 | 94,3 | 96% | 3,7% | 1% | 99% | 99% | 0% | 1% | 99% |
| 14 | 123 | Graphite | 60 | 900 | F. C. lamgold | 13 | 1,212 | Ø | Ø | $N_2$, 2 H, 950 °C | CO | 0,4 | 0,4 | 1,2121 | nd | nd | 78% | 2,5% | 19% | 81% | 20% | 0% | 80% | 20% |
| 15 | 124 | Graphite | 60 | 900 | F. C. lamgold | 13 | 1,245 | $BCl_3$ | 0,1L/min | Ø | CO | 0,4 | 0,4 | 1,2445 | nd | nd | 95% | 2,0% | 3% | 97% | 91% | 0% | 9% | 91% |

AC Darco 20-40, activated charcoal, unground grain-size: 400 to 800 μm; AC Darco 20-40G, activated charcoal, grounded grain-size: $D_{80}$ 20 μm. F.C. lamgold: Flotation concentrate source lamgold; charcoal (wood): commercial charcoal; CO: Carbon monoxide.

EXAMPLE 1: TESTING THE EFFECT OF THE LEWIS-ACID ADDITION ON THE CHLORINATION REACTION OF MIXED BASTNAESITE AND MONAZITE CONCENTRATE

The theoretical basis of the chlorination process was described in detail above including the effect of a Lewis acid addition on the dry chlorination reaction. Prior art showed that a chlorination time of at least two (2) hours was necessary to achieve good conversion rates of rare earths into chlorides for chlorination processes on mixed Bastnaesite and Monazite concentrates without a Lewis acid addition. Hence, Wang et al. (Wang, Z. C., Zhang, Li-Q, Lei, P. X., Chi, M., 2002., Metallurgical and Materials Transactions B. Vol. 33B, pp. 661-668) have obtained a conversion rate in the order of 75 wt% for a carbochlorination experiment wherein the reactant consists of $Cl_2$ plus activated charcoal, at a reaction temperature of 600 °C for two (2) hours on a mixed Bastnaesite and Monazite flotation concentrate. According to their data, after 30 minutes of carbochlorination, only approximately 35 % of rare earths were converted into chlorides.

In the first example, the effect of a Lewis acid addition was investigated on the dry chlorination process. The experimental parameters and results are presented at Table 2, above, for test no. 2. Boron trichloride ($BCl_{3(g)}$) was used as the Lewis-acid and the defluorination agent, activated charcoal has the solid carbonaceous reducer, the flowrate of chlorine ($Cl_{2(g)}$) was 0,4 L/min with a $Cl_2/BCl_3$ ratio of 4. The chlorination experiment was carried out at 600 °C for 30 minutes. For these conditions, the rare earth chloride recovery inside the reactor reached 97 wt%. By comparison to literature data on mixed Bastnaesite and Monazite concentrate, the recovery obtained for rare earths indicated an increase in efficiency by nearly a factor of 300 %. The addition of the Lewis-acid and, more particularly, $BCl_3$, as a reactant had a large effect on the chlorination reaction rate.

The higher result obtained could be explained by the variations in the chemical composition of mixed Bastnaesite and Monazite concentrates originating from different sources. In order to exclude such effects, an additional experiment (test no. 6) using similar conditions to test no. 2 was carried out without the Lewis-acid catalyst $BCl_3$ For the test no. 6, the mixed Bastnaesite and Monazite concentrate was chlorinated without addition of $BCl_3$ in the reactants. The other experimental conditions were similar of those of test no. 2. Results, shown in Table 2, above, show a decrease in the rare earth recovery of 23 % in the chlorination reactor, from 97 wt% to 75 wt% with no rare earth being present outside the chlorination reactor in both experiments.

Hartley and Willie (Hartley, F. R. and Wylie, A. W., 1950, Journal of the Society of Chemical Industry, vol. 69, no. 1, pp. 1-7) demonstrated that a diminution of the particle size of the solid carbonaceous reducer is associated with an increase of the chlorination efficiency. In test no. 2, the particle size of unground activated charcoal used as the solid carbonaceous reducer varied from about 400 $\mu$m to about 800 $\mu$m whereas in test no. 6, the activated charcoal was grinded to a $D_{80}$ of 20 $\mu$m to potentially increase the chlorination efficiency. $D_{80}$ is the average particle as determined by a screen on which 20% of the particles will remain and 80% will pass. Results obtained for test no. 6 are still inferior by 23 % for conversion of rare earths into chlorides using unground activated charcoal as opposed to grinded activated charcoal.

Thorium conversion into chloride is also an important aspect of the chlorination process. Thorium in its oxidation state of +4, such as in phosphates, presents a stronger coulombic attraction than the rare earths in their +3 oxidation state towards the phosphate ligands. Therefore, thorium phosphate should be more resistant to chlorination. Hartley and Willy (Hartley, F. R. and Wylie, A. W., 1950, Journal of the Society of Chemical Industry, vol. 69, no. 1, pp. 1-7) have reported that the chlorination of thorium in Monazite is more difficult than the chlorination of rare earths, In test no. 2, the total thorium conversion rate into chloride reached 75 wt%, while in test no. 6, the total thorium conversion rate into chloride was 44 %, thus a 41 % decrease of the conversion rate of thorium species into chloride. Thus, the addition of $BCl_3$, as the Lewis-acid, increased the chlorination efficiency by the mechanism described above.

EXAMPLE 2: TESTING THE EFFECT OF A VARIATION OF THE CONCENTRATE/CARBONACEOUS REDUCER RATIO

One of the parameters controlling the chlorination reaction speed is the time required by the gaseous reactants to reach the surface of the feed material to be chlorinated. The gaseous reactants move by diffusion through the solid bed, including the feed material, the binder, and the solid carbonaceous reducer, if any. Increasing quantities of solid carbonaceous reducer for a predetermined mass of feed material produces an increased solid bed mass to be chlorinated. This can be assimilated to a «dilution effect» expanding the distance between each of the mineral grains to be chlorinated. In order to evaluate the «dilution effect» created by the solid carbonaceous reducer, a series of experiments was conducted by fixing the mass of the rare earth concentrate and modifying the quantity of solid carbonaceous reducer added to the rare earth concentrate. It is not possible to calculate a stoichiometric quantity of carbon required to fix the oxygen present in the feed material since there are uncertainties related to the chemical composition of the concentrate and solid carbonaceous reducer used as well as the exact chemical reactions involved the chlorination process. A minimum quantity of carbonaceous reducer, which can be provided in a gaseous state or a solid state, is needed for the chlorination reaction to go to completion.

The tests concerned are tests nos. 1, 4, and 5 for which the experimental conditions and the effects associated with the variation of the solid carbonaceous reducer mass are presented in Table 2, above. The experimental conditions for each one of the tests are similar except for the quantity of solid carbonaceous reducer added to the feed material. To understand the variations, the measured parameters to consider are respectively the "Total rare earth conversion rate into chlorides" and the "Total thorium conversion rate into chloride". Results shown in Table 2 for tests nos. 1, 4, and 5 are summarized in Table 3 below.

Table 3: Effects of the variation of the weight ratio concentrate/reducer.

| Test No. | Weight ratio Concentrate / reducer | Total rare earth conversion rate into chlorides (wt%) | Total thorium conversion rate into chloride (wt%) |
|---|---|---|---|
| 1 | 1 | 85 | 61 |
| 4 | 2 | 91 | 70 |
| 5 | 4 | 97 | 97 |

Table 3 shows that a diminution of the quantity of solid carbonaceous reducer was linked to an increase of rare earth and thorium conversion rate into chlorides. This was especially important for thorium which increased from 61 wt% at a ratio of concentrate/reducer of 1 to 97 wt% for a ratio of 4. Visual inspection of the solid charge, i.e. the reaction products present in the vessel, after the experiments showed that black activated charcoal particles were still present for all ratio of concentrate/reducer tested. However, the coloration of the reaction products present in the vessel were passing from black to a light gray as the quantity of solid carbonaceous reducer lowered.

EXAMPLE 3: TESTING THE REPLACEMENT OF A SOLID CARBONACEOUS REDUCER BY A GASEOUS CARBONACEOUS REDUCER

In the below described tests, the solid carbonaceous reducer in the reactants was replaced by a gaseous carbonaceous reducer and, more particularly, carbon monoxide (CO). The presence of the solid carbonaceous reducer in the reaction products present in the vessel at the end of the chlorination reaction resulted in a solid mixture containing the chloride salts and the solid carbonaceous reducer. It is known that the solid reducer might interfere in subsequent rare earth separation processes such as fused salt electrolysis. Hartley and Willy (Hartley, F. R. and Wylie, A. W., 1950, Journal of the Society of Chemical Industry, vol. 69, no. 1, pp. 1-7) tested the replacement of the solid carbonaceous reducer with CO in the chlorination of a Monazite concentrate. Their results indicated a conversion of only 30 wt% of rare earths after a chlorination period of 3.5 hours at temperatures of 750 °C. They concluded that chlorination using CO as a reducer was not efficient. In the tested chlorination process, a Lewis acid was used as a catalyst for the chlorination reaction. Thus, the use of gaseous CO instead of a solid carbonaceous reducer was tested. Test no. 13 was carried out to evaluate the effect of CO on the chlorination efficiency. Results showed a 99 wt% conversion rate of rare earths into chlorides at a temperature of 900 °C for a reaction time of 60 minutes (including the distillation procedure under nitrogen for the removal of thorium, see example 5 below). The conversion rate for thorium reached 99 wt%. Thus, the chlorination process was very efficient in the presence of CO when $BCl_3$ was employed as a catalyst. Test no. 14 was carried out under the same experimental conditions; however, without using $BCl_3$ as catalyst. For this test, the conversion rate of rare earths into chlorides diminished from 99 wt% to 81 wt% while the conversion rate for thorium lowered from 99 wt% to 20 wt%, reflecting the greater stability of thorium phosphate in dry chlorination process as discussed above in reference to Example 1.

EXAMPLE 4: TESTING THE CONVERSION OF THORIUM AND URANIUM INTO CHLORIDES AND THEIR DISTILLATION FROM THE RARE EARTH CHLORIDE CONCENTRATE

As mentioned above, the process can include an additional step to remove thorium and uranium from the chloride rare earth concentrate. The thorium and uranium removal is achieved by the conversion of thorium and uranium into their chloride forms followed by their distillation from the rare earth concentrate at a temperature around 900 °C. A set of experiments was carried out to demonstrate the thorium and uranium conversion into chlorides and their subsequent separation from the chloride rare earth concentrate by distillation under nitrogen at 950 °C. The concentrate employed for the tests carried out was low in uranium (5 ppm). Therefore, it was not possible to ascertain the behaviour of uranium in the tests carried out. However, the behavior of uranium can be deduced since thorium and uranium have a similar chemistry.

Test no. 8, shown in Table 2 above, indicated that, for a chlorination time of 30 minutes at 600 °C, a conversion rate of rare earths into chlorides was 98 wt% while the thorium conversion rate reached 66 wt%. Test no. 5 and the duplicate test no. 11, carried out at 900 °C for 30 minutes, showed conversion rates of respectively 97 wt% and 98 wt% for rare earths. For thorium, the conversion rate varied from 97 wt% to 91 wt%.

In order to increase the conversion rate for thorium, the reaction time was increased to 60 minutes at both 600 °C and 900 °C. Test no. 9 was performed at 600 °C for 60 minutes. At the end of the chlorination period, the reactant gases were stopped and replaced by nitrogen. The furnace temperature was raised to 950 °C and the vessel containing the reaction products was maintained under a flow of nitrogen for 120 minutes. At 950 °C, the distillation of thorium as $ThCl_4$ from the rare earth chlorides present in the vessel occurred. Most of the $ThCl_4$ condensate was positioned just at the exit of the furnace hot zone. Results showed that all thorium, 99 wt%, was removed from the rare earth concentrate present in the chlorination reactor. Approximately 3 wt% of rare earths was transported outside the chlorination reactor by the distillation procedure carried out for thorium separation. The gaseous chemical transportation of the rare earth chlorides is a consequence of complex formation through chloride bonding with $ThCl_4$.

For test no. 10, shown in Table 2 above, the chlorination temperature was set to 900 °C for a period of 60 minutes. This was followed by the distillation procedure described above for thorium. All thorium was removed from the sample and about 3 wt% of rare earth chlorides was transported outside the chlorination reactor.

For test no. 12, grounded activated charcoal was replaced with charcoal (wood) with very similar results. Distillation of thorium from the rare earth concentrate after the chlorination step was an effective separation method. The distillation procedure at around 900 °C can be carried out after the chlorination step at a lower temperature, for instance 600 °C or after a chlorination stage conducted at a temperature similar to the distillation temperature.

Results of chlorination experiments, tests nos. 11 and 13, carried out at 900 °C demonstrated also that thorium can be completely transported outside the chlorination reactor, without a distillation procedure under nitrogen, if a sufficiently long chlorination period is selected, for instance 90 minutes. In tests nos. 9, 10, 11, and 12, conversion rates for rare earths were all above 98 wt%.

EXAMPLE 5: TESTING THE EFFECT OF TEMPERATURE ON THE DISTILLATION OF THORIUM

In test no. 8, chlorination was carried out at 600 °C for 30 minutes. Results shown in Table 2, above, indicated that only 2 wt% of thorium was recovered outside the chlorination reactor. Sublimation of $ThCl_4$ occurred at 820 °C. The experimental temperature of test no. 8 was not high enough to permit distillation of the $ThCl_4$ from the rare earth concentrate. Furthermore, the chlorination time of 30 minutes was not sufficient long to assure complete conversion of thorium species into $ThCl_4$. The conversion rate of thorium into chloride was 66 wt%. Nevertheless, this was an indication that, at temperatures around 600 °C, the $ThCl_4$ produced by the chlorination reaction did not escape the chlorination reactor and stayed within the rare earth concentrate. A similar situation was encountered in test no. 7 where the chlorination temperature was set at 500 °C for 30 minutes. Results indicated that only 1 wt% of $ThCl_4$ was recovered outside the chlorination reactor. All tests conducted at 600 °C or below, i.e. tests nos. 2, 6, 7, and 8, showed that the $ThCl_4$ produced by the chlorination process was not or was slightly transported outside the chlorination reactor. To determine an optimal chlorination temperature at which the chlorination reaction is maximized without or with low volatilisation of $ThCl_4$, a further test at 700 °C was carried out. For test no. 3, the chlorination temperature was set at 700 °C with a reaction time of 30 minutes. Results showed that 8 wt% of thorium is recovered outside the chlorination reactor. Temperatures above 600 °C increased the distillation of thorium out of the rare earth concentrate.

The results of tests nos. 2, 6, 7, and 8 in combination with the results of test no. 9 indicate that the chlorination process allows the complete conversion of thorium into $ThCl_4$ at 600 °C. The conversion is carried out without or with a minor volatilisation of $ThCl_4$. Hence, a chlorination step at 600 °C can be carried out to remove volatile chlorides such as $FeCl_3$ $POCl_3$ without removal of thorium. After the chlorination step, the thorium can be distilled from the rare earth concentrate at a higher temperature under a nitrogen flow for a suitable period of time. This procedure facilitates the isolation of thorium from other volatile chlorides.

EXAMPLE 6: CHEMICAL ANALYSIS OF THE RARE EARTH CONCENTRATE AFTER CHLORINATION.

Table 4, below, presents the elemental analysis of the rare earth concentrate obtained after the chlorination procedure for tests nos. 13 and 15. Only elements with concentrations higher than 1 wt% are reported in Table 4. Identical results for chloride conversion and thorium separation were obtained when the chlorination temperature was set at 900 °C instead of 600 °C. Elemental analysis of two selected chlorinated rare earth concentrate after thorium removal showed a composition of 68 wt% rare earths, 30 wt% calcium (Ca), and 2 wt% barium (Ba). The concentrate contained only chloride ligand as indicated by its complete dissolution in water. Fluoride forms of these elements are not soluble or only slightly soluble in water. As expected, all the fluoride ions were therefore removed by the defluorination process with $BCl_3$ and replaced by chloride ions. All elements forming volatile chloride compounds were extracted from the concentrate. The exact nature of the elements extracted as volatile chlorides from the concentrate will depend on their boiling point.

In these specific examples, the chlorination temperature was set to 900 °C for 1 hour. This was followed by a distillation procedure under nitrogen for two (2) hours at 950 °C for test no. 13. Hence, all elements forming chloride compounds with a boiling point around 900 °C were removed from the concentrate and displaced along the quartz process tube at a location where the temperature allowed their deposition as solids. These solids further migrated in the apparatus as a fine powder or an aerosol by the gas flow maintained in the chlorination reactor. The elements still present in the chlorinated concentrate were those for which their chloride forms have a boiling point above 950 °C, including mainly alkaline earth chlorides and rare earth chlorides. Results shown in Tables 2 and 4 indicate that the chlorination process produced a chloride concentrate free of thorium that was ready for further purification or for the deposition of mishmetal by a melted salt electrolysis process. The alkaline earth chlorides, produced by the chlorination of the original feed concentrate, present in the rare earth chloride concentrate can act as built-in electrolyte in a salt electrolysis procedure. The group II(A) elements are more electropositive than rare earth elements. Therefore, the cathodic deposition of $Ln^{+3}$ ions will be favored over $Ca^{+2}$ and $Ba^{+2}$ ions.

Table 4: Elemental analysis (wt%) of major elements contained in the produced rare earth chlorination concentrate.

| Test no. | Rare earths (wt%) | Calcium (wt%) | Barium (wt%) |
|---|---|---|---|
| 13 | 68 | 30 | 2 |
| 15 | 68 | 30 | 2 |

Thus, a new process was developed to extract rare earths from an ore containing rare earths. The ore includes ore concentrates including rare earths. The ore and the ore concentrate can be obtained from mining and metallurgical operations. The process is able to transform the rare earth values from their phosphates and/or oxide and/or carbonate fluoride forms into their corresponding anhydrous chloride forms. The anhydrous rare earth chlorides can be used in a subsequent step to produce mishmetal by fused salt electrolysis or can be readily dissolved in a weak acidic solution and separated by solvent extraction or by column ion exchange. The above-described process is different from prior art processes based on dissolution of concentrates in strong aqueous acid from which hydrated chloride rare earth salts can be produced, $LnCl_3(H_2O)_X$. The hydrated salts once formed cannot be transformed to the anhydrous form $LnCl_3$ by a heating dehydration procedure. The hydrated salts undergo hydrolysis to the oxyhalide LnOCl and the anhydrous salts cannot be made (Cotton, S., 2006, Lanthanide and Actinide Chemistry, John Wiley & Sons, 263 p.). The oxyhalide are slightly soluble in strong aqueous acid limiting their utilisation in metallurgy. The oxyhalide are not reactive to a salt melt electrolysis procedure being more stable than the alkaline earth chloride salts (Group IIA) currently employed as electrolytes.

In some implementations, the process is able to isolate thorium and/or uranium, which are detrimental to the environment, from the anhydrous rare earth chloride concentrate and from other elements, In an embodiment, the thorium and/or uranium are isolated under a binary compound such as anhydrous chlorides permitting their separation and transformation to chemical forms usable commercially or in future nuclear operations such as thorium fuel based reactor. Alternatively, the thorium and uranium chlorides can be transformed to stable oxide or phosphate products for safe disposal.

Also, the process can operate at the lowest possible temperature within the possibilities of dry chlorination procedure in order to minimize potential problems of corrosion linked to the use of corrosive compounds such as $Cl_2$ in a gaseous state. In an implementation, the operation temperature for the chlorination reaction should be below the melting point of rare earth chlorides, alkaline earth chlorides, and thorium and uranium chlorides and above the boiling points of volatile chlorides such as $FeCl_3$, $AlCl_3$, $POCl_3$, $PCl_3$, $PCl_5$, $TiCl_4$, $SiCl_4$, $NbCl_5$, $ZrCl_4$, and $HfCl_4$, The products of the chlorination reaction can thus be in a gaseous state and a solid state, avoiding the liquid state. Since the chloride mixture produced is dry, continuous feeding mode chlorination equipment, such as rotary kiln and fluidised bed, can be used instead of batch mode chlorination reactors to increase the production rate. Furthermore, a liquid chloride mixture in the chlorination reactor will cause grain to aggregate and impede the operation of rotary and fluidised equipment. Inspection of melting points and boiling points of the various chlorides indicates that chlorination temperatures between about 400 °C to about 600 °C could be suitable.

There is thus provided a dry chlorination process for producing anhydrous rare earth chlorides from an ore containing rare earths. In some implementations, the ore can be an ore concentrate including rare earths. The process requires contacting the ore including the rare earths with reactants including a boron-containing Lewis acid selected from the group consisting of: $B(OH)_3$, $BCl_3$, $B_2O_3$, $Na_2B_4O_7$, and mixtures thereof, a carbonaceous reducing agent, and chlorine to obtain anhydrous rare earth chlorides. The reaction is carried out in a suitable chlorination reactor at a temperature varying from about 300 °C to about 1000 °C. In an embodiment, the chlorination temperature varies between about 400 °C and about 800 °C.

In some implementations, the process can include comminuting the ore including the rare earth to a predetermined particle size.

In some implementations, a mixture including the ore containing the rare earths and a binder can be pelletized in a suitable pelletizing equipment. In some implementations, the mixture can further include the carbonaceous reducing agent in a solid state. Thus, in some implementations, the ore including the rare earths is contacted as pellets with the reagents.

In some implementations, the carbonaceous reducing agent is added in a gaseous state. For instance, the carbonaceous reducing agent can include gaseous carbon monoxide. In an embodiment, the process comprises feeding directly the gaseous carbonaceous reducing agent to the chlorination reactor. In an alternative embodiment, the process comprises mixing the gaseous carbonaceous reducing agent with at least one of the reactants in a gaseous state; and feeding the gaseous reactant mixture in the chlorination reactor.

The Lewis acid comprises a boron containing compound selected from the group consisting of: $B(OH)_3$, $BCl_3$, $B_2O_3$, $Na_2B_4O_7$, and mixtures thereof. In a particular embodiment, the Lewis acid includes gaseous boron trichloride ($BCl_3$). In a particular embodiment, the Lewis acid comprises a Lewis acid compound in a solid state. For instance, the Lewis acid compound can be added to the mixture including the ore containing the rare earths and the binder and pelletized therewith. In another embodiment, the Lewis acid is in a gaseous state. In still another embodiment, the Lewis acid is adsorbed on the carbonaceous reducing agent in a solid state. The Lewis acid acts as a defluorination agent.

In some implementations, the reagents further include a defluorination agent.

The chlorination reactor is selected to be able to resist to the corrosive nature of the gases used to obtain anhydrous rare earth chlorides.

The contacting step also produces a gaseous product including volatile chlorides. The volatile chlorides can comprise $FeCl_3$, $POCl_3$, $TiCl_4$, and the like. The volatile chlorides leave the chlorination reactor in a gaseous state. The process can further comprise condensing the volatile chlorides, outside the chlorination reactor, in a suitable volatile condenser unit. The process can further comprise separating the volatile chlorides by fractional distillation and recovering separately the distilled chloride products.

In an embodiment, the process comprises recovering, from the gaseous product, the unreacted $Cl_2$ and $BCl_3$ exiting the chlorination reactor in a suitable condenser, downstream of the volatile condenser unit. The process can further comprise, distilling the recovered $Cl_2$ and $BCl_3$ and adding the distilled $Cl_2$ and $BCl_3$ as reactants in a gaseous state to the chlorination reactor.

In an embodiment, the anhydrous chloride rare earths are included in an anhydrous non-volatile chloride mixture. The anhydrous non-volatile chloride mixture is either in a solid state or a liquid state and remains in the chlorination reactor after the contacting step. The anhydrous chloride mixture can also comprise alkaline and alkaline earth chlorides. The process can further comprise recovering the anhydrous chloride mixture still present in the chlorination reactor after the chlorination step in a suitable receptacle. In an embodiment, the recovery step is carried out by maintaining the anhydrous chloride mixture under an inert gas atmosphere to impede the oxidation and hydration of the chlorides contained in the anhydrous chloride mixture. In an embodiment, the recovery step comprises liquefying the anhydrous chloride mixture in a solid state in the chlorination reactor. In an embodiment, if the reactants include a carbonaceous reducing agent in a solid state, the anhydrous chloride mixture can further comprise the unreacted solid carbonaceous reducing agent. The process can further comprise carrying out a molten salt filtration on the anhydrous chloride mixture to separate the unreacted solid carbonaceous reducing agent. In an embodiment, the process comprises adding the recovered solid carbonaceous reducing agent, as a reactant, to the ore in the pelletizing step. If the reactants are substantially free of a carbonaceous reducing agent in a solid state, the molten salt filtration can be eliminated since the anhydrous chloride mixture is substantially free of an unreacted solid carbonaceous reducing agent.

In an embodiment, the ore including the rare earths further comprises thorium and/or uranium and the contacting step comprises producing thorium and/or uranium chlorides.

In an embodiment, depending on the chlorination temperature in the chlorination reactor, the thorium and/or uranium chlorides are contained in the anhydrous chloride mixture and, thus, remain in the chlorination reactor, in either a solid state or a liquid state, after the contacting step. In an embodiment, the process can further comprise separating the thorium and/or uranium chlorides from the anhydrous chloride mixture in a suitable container at a temperature allowing evaporation of thorium and/or uranium chlorides from a remainder of the anhydrous chloride mixture. The separating step can comprise maintaining an inert gas atmosphere during the separation.

In another embodiment, depending on the chlorination temperature in the chlorination reactor, the thorium and/or uranium chlorides are contained in the gaseous product and are expelled from the chlorination reactor as volatile compounds. In an embodiment, the process can further comprise isolating the thorium and/or uranium chlorides in a suitable thorium-uranium condenser, maintained at a predetermined temperature allowing the selective condensation of the thorium and/or uranium chlorides as solid particles from the gaseous product escaping the chlorination reactor. The process can further comprise partially condensing a remainder of the gaseous product exiting the thorium-uranium condenser, downstream the thorium-uranium condenser, in a suitable vessel maintained at a predetermined temperature. The remainder of the gaseous product can include the volatile chlorides $FeCl_3$, $POCl_3$, $TiCl_4$, and the like which are separated from the unreacted $BCl_3$ and $Cl_2$. In an embodiment, the process further comprises separating the remainder of the gaseous product by fractional distillation and recovering separately the distilled chloride products.

It will be appreciated that the methods and processes described herein may be performed in the described order, or in any suitable order.

Several alternative embodiments and examples have been described and illustrated herein. The embodiments of the invention described above are intended to be exemplary only. A person of ordinary skill in the art would appreciate the features of the individual embodiments, and the possible combinations and variations of the components. A person of ordinary skill in the art would further appreciate that any of the embodiments could be provided in any combination with the other embodiments disclosed herein. It is understood that the invention may be embodied in other specific forms without departing from central characteristics thereof. The present examples and embodiments, therefore, are to be considered in all respects as illustrative and not restrictive, and the invention is not to be limited to the details given herein. Accordingly, while the specific embodiments have been illustrated and described, numerous modifications come to mind. The scope of the invention is therefore intended to be limited solely by the scope of the appended claims.

## Claims

1.   A process for producing at least one anhydrous rare earth chloride from an ore containing the at least one rare earth, the process comprising:
     contacting the ore containing the at least one rare earth with reactants comprising a carbonaceous reducing agent, chlorine, and a boron-containing Lewis acid acting as a defluorination agent in a chlorination reactor to produce a gaseous product and an anhydrous non-volatile chloride mixture comprising the at least one rare earth chloride, the boron-containing Lewis acid being selected from the group consisting of: $B(OH)_3$, $BCl_3$, $B_2O_3$, $Na_2B_4O_7$, and mixtures thereof.

2.   The process as claimed in claim 1, wherein the ore containing the at least one rare earth is an ore concentrate containing the at least one rare earth, preferably the ore concentrate is a rare earth flotation concentrate and the ore comprises at least one of Bastnaesite ore and Monazite ore.

3.   The process as claimed in one of claims 1 and 2, wherein contacting the ore with the reactants is carried out in the chlorination reactor at a temperature ranging between 300 °C and 1000 °C, preferably between 400 °C and 800 °C.

4.   The process as claimed in any one of claims 1 to 3, further comprising:

     comminuting the ore containing the at least one rare earth into ore particles, wherein preferably 95 wt% of the ore particles range between 10 $\mu$m and 1000 $\mu$m; and
     pelletizing a mixture including the ore particles and a binding agent to obtain pellets having a diameter ranging between 1mm to 10 mm; and
     wherein the contacting step comprises contacting the pellets with the reactants.

5.   The process as claimed in claim 4, wherein the mixture further comprises at least one of the carbonaceous reducing agent and the boron-containing Lewis acid in a solid state, wherein the carbonaceous reducing agent comprises at least one of activated charcoal, activated carbon, charcoal, coal, coke, and graphite.

6.   The process as claimed in any one of claims 1 to 5, wherein a ratio of a mass of the ore and a mass of the carbonaceous reducing agent introduced in the chlorination reactor is above 1.

7.   The process as claimed in any one of claims 1 to 6, wherein at least one of the reactants is in a gaseous state and the at least one of the reactants in the gaseous state comprises at least one of chlorine, the boron-containing Lewis acid, preferably boron trichloride ($BCl_3$), and the carbonaceous reducing agent, preferably carbon monoxide.

8.   The process as claimed in claim 7, wherein a ratio of chlorine and $BCl_3$ introduced in the chlorination reactor ranges between 1 and 20.

9.   The process as claimed in claim 1, wherein the carbonaceous reducing agent comprises a carbonaceous reducing agent in a solid state and including at least one of activated charcoal, activated carbon, charcoal, coal, coke, and graphite and, wherein the boron-containing Lewis acid is adsorbed on the carbonaceous reducing agent in the solid state.

**10.** The process as claimed in any one of claims 1 to 9, wherein the gaseous product comprises volatile chlorides and unreacted gaseous reactants, wherein the volatile chlorides comprise at least one of $FeCl_3$, $AlCl_3$, $POCl_3$, $PCl_3$, $PCl_5$, $TiCl_4$, $SiCl_4$, $NbCl_5$, $ZrCl_4$, and $HfCl_4$ and the unreacted gaseous reactants comprises chlorine and $BCl_3$, and the process further comprises:

withdrawing the volatile chlorides and the unreacted gaseous reactants from the chlorination reactor; and condensing the volatile chlorides withdrawn from the chlorination reactor in a volatile condenser unit to separate the condensed chlorides from the unreacted gaseous reactants.

**11.** The process as claimed in any one of claims 1 to 10, wherein the non-volatile chloride mixture comprises at least one of an alkaline chloride and an alkaline earth chloride.

**12.** The process as claimed in claim 1, wherein the ore containing the at least one rare earth further comprises thorium and/or uranium and the process further comprises recovering the anhydrous non-volatile chloride mixture by maintaining the anhydrous chloride mixture under an inert gas atmosphere and raising a temperature of the chlorination reactor at a temperature below at least one of a boiling point of thorium chloride and a boiling point of uranium chloride to liquefy the anhydrous non-volatile chloride mixture.

**13.** The process as claimed in claim 1, wherein the ore containing the at least one rare earth further comprises thorium and/or uranium and the contacting step further comprises producing thorium and/or uranium chlorides and wherein contacting the ore with the reactants is carried out in the chlorination reactor at a temperature ranging between 300 °C and 700 °C, preferably between 500 °C and 600 °C, and more than 50 wt% of the thorium and/or uranium chlorides are contained in the non-volatile chloride mixture in the chlorination reactor.

**14.** The process as claimed in claim 13, further comprising recuperating the thorium and/or uranium chlorides from a remainder of the non-volatile chloride mixture by gasifying the thorium and/or uranium chlorides in a thorium and/or uranium distillation unit at a temperature above a boiling temperature of the thorium and/or uranium chlorides; separating the thorium and/or uranium in a gaseous state from the remainder of the non-volatile chloride mixture; and condensing the separated thorium and/or uranium as thorium and/or uranium chlorides.

**15.** The process as claimed in claim 1, wherein the ore containing the at least one rare earth further comprises thorium and/or uranium and the contacting step further comprises producing thorium and/or uranium chlorides and wherein contacting the ore with the reactants is carried out in the chlorination reactor at a temperature ranging between 700 °C and 1000 °C, preferably between 800 °C and 950 °C, and more than 50 wt% of the thorium and/or uranium chlorides are contained in the gaseous product of the chlorination reactor, the process further comprising recuperating the thorium and/or uranium chlorides from a remainder of the gaseous product in a thorium-uranium condenser at a temperature ranging between 200 °C and 700 °C, the remainder of the gaseous product comprising volatile chlorides and unreacted gaseous reactants, the volatile chlorides comprise at least one of $FeCl_3$, $AlCl_3$, $POCl_3$, $PCl_3$, $PCl_5$, $TiCl_4$, $SiCl_4$, $NbCl_5$, $ZrCl_4$, and $HfCl_4$ and the unreacted gaseous reactants exiting the volatile chloride condenser unit comprise $Cl_2$ and $BCl_3$, wherein the process further comprising condensing the volatile chlorides exiting the thorium-uranium condenser, downstream the thorium-uranium condenser, in a volatile chloride condenser unit and distilling the $Cl_2$ and $BCl_3$, downstream the volatile chloride condenser unit.

**Patentansprüche**

**1.** Prozess zum Erzeugen mindestens eines wasserfreien Seltenerdchlorids aus einem Erz, das die mindestens eine seltene Erde enthält, wobei der Prozess umfasst:
In-Kontakt-Bringen des Erzes, das die mindestens eine seltene Erde enthält, mit Reaktionsmitteln, umfassend ein kohlenstoffhaltiges Reduktionsmittel, Chlor und eine borhaltige Lewis-Säure, als ein Defluorierungsmittel wirkend, in einem Chlorierungsreaktor, um ein gasförmiges Produkt und ein wasserfreies nichtflüchtiges Chloridgemisch zu erzeugen, umfassend das mindestens eine Seltenerdchlorid, wobei die borhaltige Lewis-Säure ausgewählt ist aus der Gruppe, bestehend aus: $B(OH)_3$, $BCl_3$, $B_2O_3$, $Na_2B_4O_7$ und Gemischen davon.

**2.** Prozess nach Anspruch 1, wobei das Erz, das die mindestens eine seltene Erde enthält, ein Erzkonzentrat ist, das die mindestens eine seltene Erde enthält, wobei vorzugsweise das Erzkonzentrat ein Flotationskonzentrat einer seltenen Erde ist und das Erz mindestens eines von Bastnäsiterz und Monaziterz umfasst.

3. Prozess nach einem der Ansprüche 1 und 2, wobei ein In-Kontakt-Bringen des Erzes mit den Reaktionsmitteln im Chlorierungsreaktor bei einer Temperatur in der Reichweite zwischen 300 °C und 1000 °C, vorzugsweise zwischen 400 °C und 800 °C durchgeführt wird.

4. Prozess nach einem der Ansprüche 1 bis 3, weiter umfassend:

Zerkleinern des Erzes, das die mindestens eine seltene Erde enthält, in Erzpartikel, wobei vorzugsweise 95 Gew.-% der Erzpartikel in der Reichweite zwischen 10 $\mu$m und 1000 $\mu$m liegen; und
Pelletieren eines Gemischs, einschließlich der Erzpartikel und eines Bindemittels, um Pellets zu erhalten, die einen Durchmesser in der Reichweite zwischen 1 mm und 10 mm aufweisen; und
wobei der Schritt des In-Kontakt-Bringens ein In-Kontakt-Bringen der Pellets mit den Reaktionsmitteln umfasst.

5. Prozess nach Anspruch 4, wobei das Gemisch weiter mindestens eines von dem kohlenstoffhaltigen Reduktionsmittel und der borhaltigen Lewis-Säure in einem festen Zustand umfasst, wobei das kohlenstoffhaltige Reduktionsmittel mindestens eines von aktivierter Holzkohle, Aktivkohle, Holzkohle, Kohle, Koks und Graphit umfasst.

6. Prozess nach einem der Ansprüche 1 bis 5, wobei ein Verhältnis einer Masse des Erzes und einer Masse des kohlenstoffhaltigen Reduktionsmittels, die in den Chlorierungsreaktor eingeführt werden, mehr als 1 beträgt.

7. Prozess nach einem der Ansprüche 1 bis 6, wobei mindestens eines der Reaktionsmittel in einem gasförmigen Zustand ist und das mindestens eine der Reaktionsmittel im gasförmigen Zustand mindestens eines von Chlor, der borhaltigen Lewis-Säure, vorzugweise Bortrichlorid (BCl$_3$), und dem kohlenstoffhaltigen Reduktionsmittel, vorzugsweise Kohlenstoffmonoxid, umfasst.

8. Prozess nach Anspruch 7, wobei ein Verhältnis von Chlor und BCl$_3$, die in den Chlorierungsreaktor eingeführt werden, in der Reichweite zwischen 1 und 20 liegt.

9. Prozess nach Anspruch 1, wobei das kohlenstoffhaltige Reduktionsmittel ein kohlenstoffhaltiges Reduktionsmittel in einem festen Zustand umfasst, und mindestens eines von aktivierter Holzkohle, Aktivkohle, Holzkohle, Kohle, Koks und Graphit einschließend, und wobei die borhaltige Lewis-Säure auf dem kohlenstoffhaltigen Reduktionsmittel im festen Zustand adsorbiert wird.

10. Prozess nach einem der Ansprüche 1 bis 9, wobei das gasförmige Produkt flüchtige Chloride und nichtumgesetzte gasförmige Reaktionsmittel umfasst, wobei die flüchtigen Chloride mindestens eines von FeCl$_3$, AlCl$_3$, POCl$_3$, PCl$_3$, PCl$_5$, TiCl$_4$, SiCl$_4$, NbCl$_5$, ZrCl$_4$ und HfCl$_4$ umfassen und die nichtumgesetzten gasförmigen Reaktionsmittel Chlor und BCl$_3$ umfasst und der Prozess weiter umfasst:

Entnahme der flüchtigen Chloride und der nichtumgesetzten gasförmigen Reaktionsmittel aus dem Chlorierungsreaktor; und
Kondensieren der aus dem Chlorierungsreaktor entnommenen flüchtigen Chloride in einer flüchtiger-Kondensator-Einheit, um die kondensierten Chloride von den nichtumgesetzten gasförmigen Reaktionsmitteln zu trennen.

11. Prozess nach einem der Ansprüche 1 bis 10, wobei das nichtflüchtige Chloridgemisch mindestens eines von einem Alkalichlorid und einem Erdalkalichlorid umfasst.

12. Prozess nach Anspruch 1, wobei das Erz, das die mindestens eine seltene Erde enthält, weiter Thorium und/oder Uran umfasst und der Prozess weiter Rückgewinnen des wasserfreien nichtflüchtigen Chloridgemischs durch Beibehalten des wasserfreien Chloridgemischs unter einer Inertgas-Atmosphäre und Erhöhung einer Temperatur des Chlorierungsreaktors bei einer Temperatur unter mindestens einer von einem Siedepunkt von Thoriumchlorid und einem Siedepunkt von Uranchlorid umfasst, um das wasserfreie nichtflüchtige Chloridgemisch zu verflüssigen.

13. Prozess nach Anspruch 1, wobei das Erz, das die mindestens eine seltene Erde enthält, weiter Thorium und/oder Uran umfasst und der Schritt des In-Kontakt-Bringens weiter ein Erzeugen von Thorium- und/oder Uranchloriden umfasst und wobei ein In-Kontakt-Bringen des Erzes mit den Reaktionsmitteln im Chlorierungsreaktor bei einer Temperatur in der Reichweite zwischen 300 °C und 700 °C, vorzugsweise zwischen 500 °C und 600 °C durchgeführt wird und
mehr als 50 Gew.-% der Thorium- und/oder Uranchloride im nichtflüchtigen Chloridgemisch im Chlorierungsreaktor enthalten sind.

14. Prozess nach Anspruch 13, weiter umfassend Rückgewinnen der Thorium- und/oder Uranchloride aus einem Rest des nichtflüchtigen Chloridgemischs durch Vergasen der Thorium- und/oder Uranchloride in einer Thorium- und/oder Uran-Destillationseinheit bei einer Temperatur über einer Siedetemperatur der Thorium- und/oder Uranchloride; Trennen des Thoriums und/oder Urans in einem gasförmigen Zustand vom Rest des nichtflüchtigen Chloridgemischs; und Kondensieren des getrennten Thoriums und/oder Urans als Thorium- und/oder Uranchloride.

15. Prozess nach Anspruch 1, wobei das Erz, das die mindestens eine seltene Erde enthält, weiter Thorium und/oder Uran umfasst, und der Schritt des In-Kontakt-Bringens weiter Erzeugen von Thorium- und/oder Uranchloriden umfasst und wobei In-Kontakt-Bringen des Erzes mit den Reaktionsmitteln im Chlorierungsreaktor bei einer Temperatur in der Reichweite zwischen 700 °C und 1000 °C, vorzugsweise zwischen 800 °C und 950 °C durchgeführt wird und mehr als 50 Gew.-% der Thorium- und/oder Uranchloride im gasförmigen Produkt des Chlorierungsreaktors enthalten sind, wobei der Prozess weiter Rückgewinnen der Thorium- und/oder Uranchloride aus einem Rest des gasförmigen Produkts in einem Thorium-Uran-Kondensator bei einer Temperatur in der Reichweite zwischen 200 °C und 700 °C umfasst, wobei der Rest des gasförmigen Produkts flüchtige Chloride und nichtumgesetzte gasförmige Reaktionsmittel umfasst, wobei die flüchtigen Chloride mindestens eines von $FeCl_3$, $AlCl_3$, $POCl_3$, $PCl_3$, $PCl_5$, $TiCl_4$, $SiCl_4$, $NbCl_5$, $ZrCl_4$ und $HfCl_4$ umfassen und die nichtumgesetzten gasförmigen Reaktionsmittel, die aus der flüchtiges-Chlorid-Kondensatoreinheit austreten, $Cl_2$ und $BCl_3$ umfassen, wobei der Prozess weiter ein Kondensieren der flüchtigen Chloride, die aus dem Thorium-Uran-Kondensator austreten, stromabwärts des Thorium-Uran-Kondensators, in einer flüchtiges-Chlorid-Kondensatoreinheit und Destillieren des $Cl_2$ und $BCl_3$ stromabwärts der flüchtiges-Chlorid-Kondensatoreinheit umfasst.

## Revendications

1. Procédé pour produire au moins un chlorure de métal des terres rares anhydre à partir d'un minerai contenant le au moins un métal des terres rares, le procédé comprenant :
la mise en contact du minerai contenant le au moins un métal des terres rares avec des réactifs comprenant un agent réducteur carboné, du chlore, et un acide de Lewis contenant du bore jouant le rôle d'agent de défluoration dans un réacteur de chloration pour produire un produit gazeux et un mélange de chlorures non volatils anhydres comprenant le au moins un chlorure de métal des terres rares, l'acide de Lewis contenant du bore étant sélectionné à partir du groupe constitué par : $B(OH)_3$, $BCl_3$, $B_2O_3$, $Na_2B_4O_7$, et les mélanges de ceux-ci.

2. Procédé selon la revendication 1, dans lequel le minerai contenant le au moins un métal des terres rares est un concentré de minerai contenant le au moins un métal des terres rares, de préférence le concentré de minerai est un concentré de flottation de métal des terres rares et le minerai comprend au moins l'un parmi un minerai de bastnaésite et un minerai de Monazite.

3. Procédé selon l'une quelconque des revendications 1 et 2, dans lequel la mise en contact du minerai avec les réactifs est réalisée dans le réacteur de chloration à une température située dans la plage entre 300 °C et 1000 °C, de préférence entre 400 °C et 800 °C.

4. Procédé selon l'une quelconque des revendications 1 à 3, comprenant en outre :

le broyage du minerai contenant le au moins un métal des terres rares en particules de minerai, dans lequel de préférence 95 % en poids des particules de minerai sont situés dans la plage entre 10 $\mu$m et 1000 $\mu$m ; et
la granulation d'un mélange incluant les particules de minerai et un agent de liaison pour obtenir des granulés présentant un diamètre situé dans la plage entre 1 mm et 10 mm ; et
dans lequel l'étape de mise en contact comprend la mise en contact des granulés avec les réactifs.

5. Procédé selon la revendication 4, dans lequel le mélange comprend en outre au moins l'un parmi l'agent réducteur carboné et l'acide de Lewis contenant du bore dans un état solide, dans lequel l'agent réducteur carboné comprend au moins l'un parmi un charbon actif, un carbone actif, un charbon de bois, un charbon, un coke et un graphite.

6. Procédé selon l'une quelconque des revendications 1 à 5, dans lequel un rapport entre une masse du minerai et une masse de l'agent réducteur carboné introduit dans le réacteur de chloration est supérieur à 1.

7. Procédé selon l'une quelconque des revendications 1 à 6, dans lequel au moins l'un des réactifs est dans un état gazeux et le au moins un des réactifs dans l'état gazeux comprend au moins l'un parmi le chlore, l'acide de Lewis contenant du bore, de préférence le trichlorure de bore (BCl$_3$), et l'agent réducteur carboné, de préférence le monoxyde de carbone.

8. Procédé selon la revendication 7, dans lequel un rapport entre le chlore et BCl$_3$ introduits dans le réacteur de chloration se situe dans la plage entre 1 et 20.

9. Procédé selon la revendication 1, dans lequel l'agent réducteur carboné comprend un agent réducteur carboné dans un état solide et incluant au moins l'un parmi un charbon actif, un carbone actif, un charbon de bois, un charbon, un coke, et un graphite et, dans lequel l'acide de Lewis contenant du bore est adsorbé sur l'agent réducteur carboné dans l'état solide.

10. Procédé selon l'une quelconque des revendications 1 à 9, dans lequel le produit gazeux comprend des chlorures volatils et des réactifs gazeux n'ayant pas réagi, dans lequel les chlorures volatils comprennent au moins l'un parmi FeCl$_3$, AlCl$_3$, POCl$_3$, PCl$_3$, PCl$_5$, TiCl$_4$, SiCl$_4$, NbCl$_5$, ZrCl$_4$, et HfCl$_4$ et les réactifs gazeux n'ayant pas réagi comprennent du chlore et BCl$_3$, et le procédé comprend en outre :

le retrait des chlorures volatils et des réactifs gazeux n'ayant pas réagi du réacteur de chloration ; et
la condensation des chlorures volatils retirés du réacteur de chloration dans une unité de condensation de substance volatile pour séparer les chlorures condensés des réactifs gazeux n'ayant pas réagi.

11. Procédé selon l'une quelconque des revendications 1 à 10, dans lequel le mélange de chlorures non volatils comprend au moins l'un parmi un chlorure de métal alcalin et un chlorure de métal alcalino-terreux.

12. Procédé selon la revendication 1, dans lequel le minerai contenant le au moins un métal des terres rares comprend en outre du thorium et/ou de l'uranium et le procédé comprend en outre la récupération du mélange de chlorures non volatils anhydres par le maintien du mélange de chlorures anhydres sous une atmosphère de gaz inerte et l'augmentation d'une température du réacteur de chloration à une température inférieure à au moins l'un parmi un point d'ébullition du chlorure de thorium et un point d'ébullition du chlorure d'uranium pour liquéfier le mélange de chlorures non volatils anhydres.

13. Procédé selon la revendication 1, dans lequel le minerai contenant le au moins un métal des terres rares comprend en outre du thorium et/ou de l'uranium et l'étape de mise en contact comprend en outre la production de chlorures de thorium et/ou d'uranium et dans lequel la mise en contact du minerai avec les réactifs est réalisée dans le réacteur de chloration à une température située dans la plage entre 300 °C et 700 °C, de préférence entre 500 °C et 600 °C, et plus de 50 % en poids des chlorures de thorium et/ou d'uranium sont contenus dans le mélange de chlorures non volatils dans le réacteur de chloration.

14. Procédé selon la revendication 13, comprenant en outre la récupération des chlorures de thorium et/ou d'uranium à partir d'un reste du mélange de chlorures non volatils par la gazéification des chlorures de thorium et/ou d'uranium dans une unité de distillation de thorium et/ou d'uranium à une température supérieure à une température d'ébullition des chlorures de thorium et/ou d'uranium ; la séparation du thorium et/ou de l'uranium dans un état gazeux à partir du reste du mélange de chlorures non volatils ; et la condensation du thorium et/ou de l'uranium séparés sous forme de chlorures de thorium et/ou d'uranium.

15. Procédé selon la revendication 1, dans lequel le minerai contenant le au moins un métal des terres rares comprend en outre du thorium et/ou de l'uranium et l'étape de mise en contact comprend en outre la production de chlorures de thorium et/ou d'uranium et dans lequel la mise en contact du minerai avec les réactifs est réalisée dans le réacteur de chloration à une température située dans la plage entre 700 °C et 1000 °C, de préférence entre 800 °C et 950 °C, et plus de 50 % en poids des chlorures de thorium et/ou d'uranium sont contenus le produit gazeux du réacteur de chloration, le procédé comprenant en outre la récupération des chlorures de thorium et/ou d'uranium à partir d'un reste du produit gazeux dans un condenseur de thorium-uranium à une température située dans la plage entre 200 °C et 700 °C, le reste du produit gazeux comprenant des chlorures volatils et des réactifs gazeux n'ayant pas réagi, les chlorures volatils comprennent au moins l'un parmi FeCl$_3$, AlCl$_3$, POCl$_3$, PCl$_3$, PCl$_5$, TiCl$_4$, SiCl$_4$, NbCl$_5$, ZrCl$_4$, et HfCl$_4$ et les réactifs gazeux n'ayant pas réagi sortant de l'unité de condensation de chlorures volatils comprennent Cl$_2$ et BCl$_3$, dans lequel le procédé comprend en outre la condensation des chlorures volatils sortant du condenseur de thorium-uranium, en aval du condenseur de thorium-uranium, dans une unité de condensation de chlorures volatils et la distillation du $Cl_2$ et $BCl_3$, en aval de l'unité de condensation de chlorures volatils.

FIG. 1

FIG. 2

FIG. 3

FIG. 4

EP 3 077 338 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8486360 B, Bergeron, M., Langlais, A.

### Non-patent literature cited in the description

- **GUPTA, C. K. ; KRISHNAMURTHY, N.** *Extractive metallurgy of Rare Earths,* 2005
- **WANG et al.** *Metallurgical and Materials Transactions B,* 2002, vol. 33B, 661-668
- **KROLL, W.** *Metal Industry,* 1952, vol. 81, 270-366
- **KORSHUNOV, B. J.** *Metallurgical Review of MMIJ,* 1992, vol. 8 (2), 1-33
- **HARTLEY, F. R. ; WYLIE, A. W.** *Journal of the Society of Chemical Industry,* 1950, vol. 69 (1), 1-7
- **HARTLEY, F. R.** *J. Appl. Chem.,* 1952, vol. 2, 24-31
- **GOKHALE, Y. W. et al.** *J. Sci. Industr. Res.,* 1960, vol. 19B, 422-425
- **HILAL O. M. ; EL GOHARY, F. A.** *Industrial and Engineering Chemistry,* 1961, vol. 53 (12), 997-998
- **MURASE, K. et al.** *Chemistry Letters,* 1994, 1297-1300
- **MURASE, K. et al.** *Journal of Alloys and Compounds,* 1996, vol. 233, 96-106
- **BRUGGER, W. ; GREINACHER, E.** *Journal of Metals,* 1967, vol. 19 (12), 32-35
- **WANG, Z. C. ; ZHANG, LI-Q. ; LEI, P. X. ; CHI, M.** *Metallurgical and Materials Transactions B.,* 2002, vol. 33B, 661-668
- **ZHANG, LI-Q. ; WANG, Z. C. ; TONG, S. X. ; LEI, P. X. ; ZOU, W.** *Metallurgical and Materials Transactions B.,* 2004, vol. 35B, 217-221
- **COTTON, S.** Lanthanide and Actinide Chemistry. John Wiley & Sons, 2006, 263
- **SCHAFER, H.** *Advances in inorganic and radiochemistry,* 1983, vol. 26, 210-234
- **COTTON, F.A. ; WILKINSON, G.** Advanced in inorganic chemistry. Interscience Publishers, 1972, 1145
- **WANG, Z. C. ; ZHANG, LI-Q ; LEI, P. X. ; CHI, M.** *Metallurgical and Materials Transactions B.,* 2002, vol. 33B, 661-668